# EUROPEAN PATENT APPLICATION

(11) **EP 4 779 451 A2**
(43) Date of publication of application: **22.07.2026**
(21) Application number: 26183904.7
(22) Date of filing: 13.01.2022
(51) Int. Cl.: G06F 3/04886

(54) **ELECTRONIC DEVICE AND METHOD FOR CONFIGURING LAYOUT ON BASIS OF FOLDING STATE OF ELECTRONIC DEVICE**

(30) Priority: 15.01.2021 KR 20210005877
(62) Divisional of application: 22739695.9
(71) Applicant: Samsung Electronics Co., Ltd., Suwon-si, Gyeonggi-do 16677 (KR)
(72) Inventor: Lee, Seungeun, Suwon-si, Gyeonggi-do 16677 (KR); Kang, Minseok, Suwon-si, Gyeonggi-do 16677 (KR); Kim, Nayoung, Suwon-si, Gyeonggi-do 16677 (KR); Kim, Chakyum, Suwon-si, Gyeonggi-do 16677 (KR); Kim, Seungnyun, Suwon-si, Gyeonggi-do 16677 (KR); Yun, Yongsang, Suwon-si, Gyeonggi-do 16677 (KR)
(74) Representative: Gulde & Partner

(57) **Abstract**

According to various embodiments of the present disclosure, a processor of an electronic device may be configured to: while the electronic device is in an unfolded state, display a first execution screen of a first application on a first area of a first display and a second execution screen of a second application on a second area of the first display, and based on detecting that a state of the electronic device changes from the unfolded state to a folded state, split a second display vertically into substantially two areas including a first area and a second area, and display an execution screen of the first application on the first area of the second display and an execution screen of the second application on the second area of the second display.

## Description

### [Technical Field]

The disclosure relates to an electronic device and a method for configuring a layout based on a folding state of the electronic device.

### [BACKGROUD ART]

Electronic devices are gradually becoming slimmer and tend to have enhanced design aspects and improved functional elements for differentiation. Such electronic devices are evolving to have various shapes, other than the uniform rectangular shape. For example, an electronic device may have a transformable structure capable of adjusting the size of a display to satisfy portability and usability of the electronic device. An electronic device having a transformable structure may include a foldable electronic device that operates in such a way that at least two housings are folded or unfolded with respect to each other.

The above information is presented as background information only to assist with an understanding of the disclosure. No determination has been made, and no assertion is made, as to whether any of the above might be applicable as prior art with regard to the disclosure.

### [DISCLOSURE OF INVENTION]

### [Technical Problem]

When an electronic device is switched to a folded state (or an unfolded state) while displaying the screens of a plurality of applications on a first display in an unfolded state (or a folded state), the electronic device is unable to use the screens of the plurality of applications used in the unfolded state (or the folded state) via a second display.

When an electronic device according to various embodiments of the disclosure is switched to a folded state (or an unfolded state) while displaying the screens of a plurality of applications on a first display in an unfolded state (or a folded state), the electronic device is able to display the screens of the plurality of applications used in the unfolded state (or the folded state) by configuring a layout suitable for a second display.

Aspects of the disclosure are to address at least the above-mentioned problems and/or disadvantages and to provide at least the advantages described below. Accordingly, an aspect of the disclosure is to provide an electronic device and a method for configuring a layout based on a folding state of the electronic device.

Additional aspects will be set forth in part in the description which follows and, in part, will be apparent from the description, or may be learned by practice of the presented embodiments.

### [Solution to Problem]

In accordance with an aspect of the disclosure, an electronic device is provided. The electronic device includes a hinge module, a first housing connected to the hinge module and including a first surface, a second surface facing a direction opposite to the first surface, and a first lateral surface surrounding a first space between the first surface and the second surface, a second housing connected to the hinge module to be foldable with respect to the first housing and, in an unfolded state, including a third surface facing the same direction as the first surface, a fourth surface facing a direction opposite to the third surface, and a second lateral surface surrounding a second space between the third surface and the fourth surface, a first display disposed from at least a part of the first surface to at least a part of the third surface, a second display disposed on at least a part of the fourth surface, a sensor circuit, and a processor operatively connected to the first display, the second display, and the sensor circuit, wherein the processor is configured to display screens of a plurality of applications on the first display or the second display, based on the detection of the switching of the folding state of the electronic device via the sensor circuit, identify characteristics of the second display or the first display which is activated, attribute information related to each of the plurality of applications, and/or history information, based on the characteristics of the second display or the first display which is activated, attribute information related to each of the plurality of applications, and/or history information, configure a layout to arrange the screens of the plurality of applications in the switched folding state, and, based on the configured layout, arrange the screens of the plurality of applications and display the same on the second display or the first display.

In accordance with another aspect of the disclosure, a method of configuring a layout based on the folding state of an electronic device is provided. The method includes displaying screens of a plurality of applications on a first display or a second display, based on detecting the switching of the folding state of the electronic device via the sensor circuit, identifying characteristics of the second display or the first display which is activated, attribute information related to each of the plurality of applications, and/or history information, based on the characteristics of the second display or the first display which is activated, attribute information related to each of the plurality of applications, and/or history information, configuring a layout to arrange the screens of the plurality of applications in the switched folding state, and, based on the configured layout, arranging the screens of the plurality of applications and displaying the second display or the first display.

### [Advantageous Effects of Invention]

An electronic device according to various embodiments of the disclosure may configure a layout to display screens of a plurality of applications on a display activated according to the switching of the folding state of the electronic device. The electronic device may provide continuity for continuously using the screens of the plurality of applications by displaying the screens of the plurality of applications based on the layout configured on the display which is activated.

Other aspects, advantages, and salient features of the disclosure will become apparent to those skilled in the art from the following detailed description, which, taken in conjunction with the annexed drawings, discloses various embodiments of the disclosure.

### [Brief Description of Drawings]

The above and other aspects, features, and advantages of certain embodiments of the disclosure will be more apparent from the following description taken in conjunction with the accompanying drawings, in which:
FIG. 1 is a block diagram of an electronic device in a network environment, according to an embodiment of the disclosure;
FIG. 2A is a view illustrating an unfolded state of an electronic device, according to an embodiment of the disclosure;
FIG. 2B is a view illustrating a folded state of the electronic device of FIG. 2A, according to an embodiment of the disclosure;
FIG. 3 is an exploded perspective view of an electronic device, according to an embodiment of the disclosure;
FIG. 4 is a block diagram illustrating an electronic device, according to an embodiment of the disclosure;
FIG. 5 is a flowchart for explaining a method of configuring a layout, based on the switching of the folding state of an electronic device, according to an embodiment of the disclosure;
FIG. 6 is a flowchart for explaining a method of configuring a layout, based on the switching of the folding state of an electronic device from an unfolded state to a folded state, according to an embodiment of the disclosure;
FIGS. 7A and 7B are views for explaining a method for configuring a layout, based on the switching of the folding state of an electronic device from an unfolded state to a folded state, according to various embodiments of the disclosure;
FIG. 8 is a flowchart for explaining a method for configuring a layout, based on the switching of the folding state of an electronic device from a folded state to an unfolded state, according to an embodiment of the disclosure;
FIGS. 9A and 9B are views for explaining a method for configuring a layout, based on the switching of the folding state of an electronic device from a folded state to an unfolded state, according to various embodiments of the disclosure;
FIGS. 10A and 10B are views for explaining a method for configuring a layout, based on the reception of an event, according to various embodiments of the disclosure;
FIG. 11 is a flowchart for explaining a method for displaying at least one item indicating a layout related to the arrangement of screens of a plurality of applications, according to an embodiment of the disclosure;
FIGS. 12A, 12B, and 12C are views for explaining a method for displaying at least on item indicating a layout related to the arrangement of screens of a plurality of applications, according to various embodiments of the disclosure;
FIG. 13A is a view illustrating an unfolded state of an electronic device, according to an embodiment of the disclosure;
FIG. 13B is a view illustrating a folded state of the electronic device of FIG. 13A, according to an embodiment of the disclosure;
FIG. 14 is a view for explaining a method for configuring a layout, based on the switching of the folding state of an electronic device, according to an embodiment of the disclosure;
FIGS. 15A and 15B are views for explaining a method for configuring a layout, based on the switching of the state of an electronic device, according to various embodiments of the disclosure; and
FIG. 16 is a view for explaining a method for configuring a layout, based on the switching of the state of an electronic device, according to an embodiment of the disclosure.

The same reference numerals are used to represent the same elements throughout the drawings.

### [MODE FOR THE INVENTION]

The following description with reference to the accompanying drawings is provided to assist in a comprehensive understanding of various embodiments of the disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

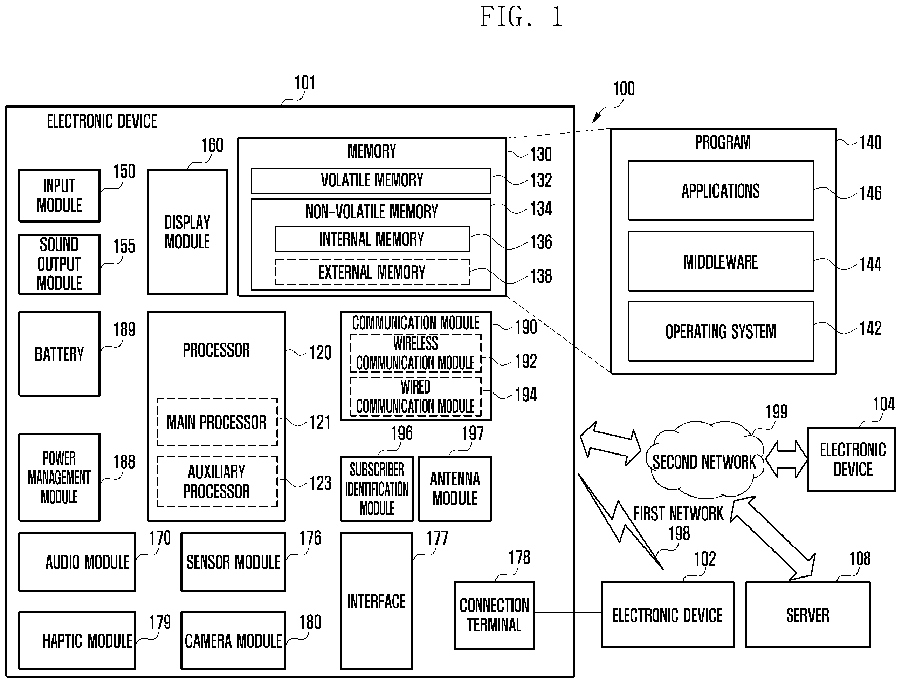

FIG. 1 is a block diagram illustrating an electronic device in a network environment according to an embodiment of the disclosure.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, or applications 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) (e.g., speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., through wires) or wirelessly. According to an embodiment, the interface 177 may include, for example, a high-definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., an application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, Wi-Fi direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., an mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices (e.g., electronic devices 102 and 104 or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

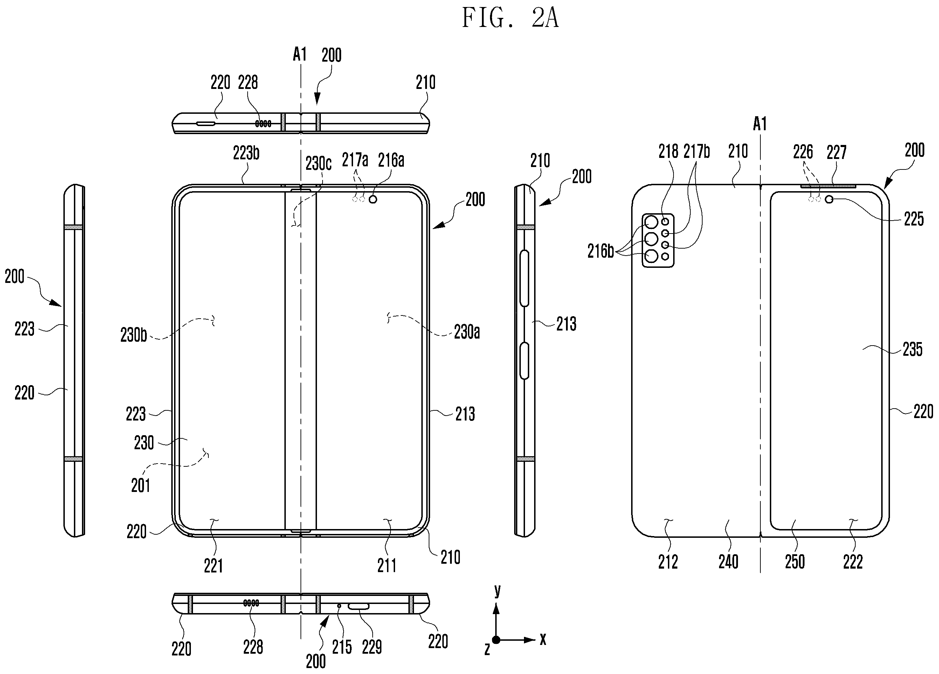

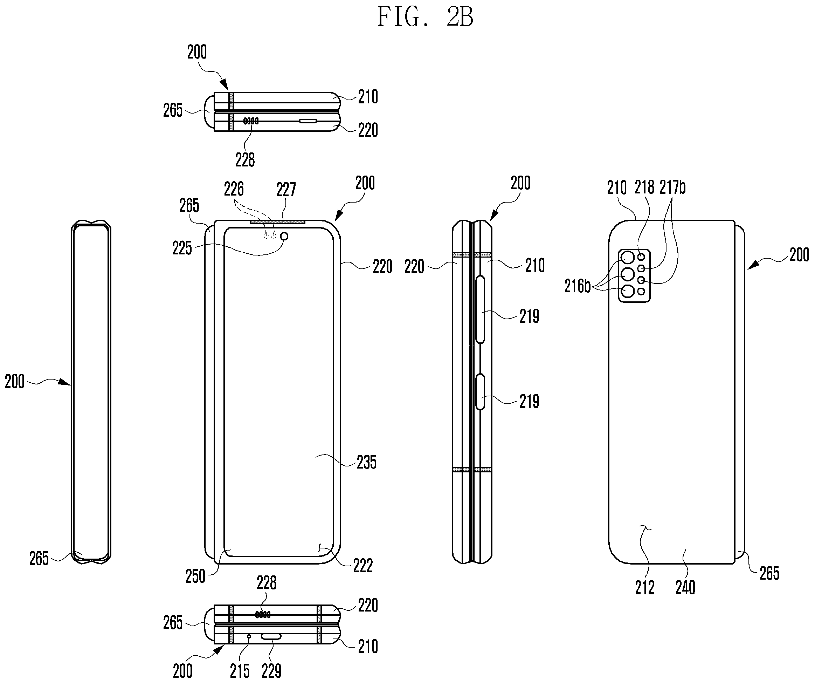

FIG. 2A is a diagram illustrating an unfolded state of an electronic device according to an embodiment of the disclosure. FIG. 2B is a diagram illustrating a folded state of the electronic device of FIG. 2A according to an embodiment of the disclosure.

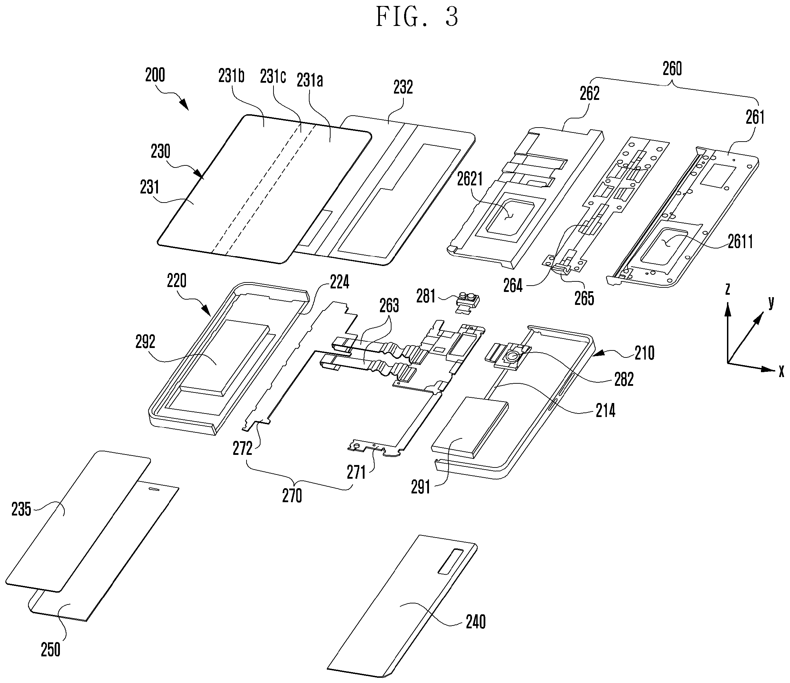

Referring to FIGS. 2A and 2B, an electronic device 200 may include a pair of housings 210 and 220 (e.g., foldable housing) rotatably coupled based on a folding axis A1 through a hinge device (e.g., a hinge device 264 of FIG. 3) to be foldable with respect to each other, a first display 230 (e.g., flexible display, foldable display, or main display) disposed through the pair of housings 210 and 220, and/or a second display 235 (e.g., sub-display) disposed through a second housing 220. According to certain embodiments, at least a portion (e.g., hinge devices 320 and 320-1 of FIG. 3) of the hinge device (e.g., the hinge device 264 of FIG. 3) may be disposed to not be visible from the outside through a first housing 210 and the second housing 220 and disposed to not be visible from the outside through a hinge cover 265 covering a foldable portion in an unfolded state. In this document, a surface in which the first display 230 is disposed may be defined as a front surface of the electronic device 200, and an opposite surface of the front surface may be defined as a rear surface of the electronic device 200. Further, a surface enclosing a space between the front surface and the rear surface may be defined as a side surface of the electronic device 200.

According to various embodiments, the pair of housings 210 and 220 may include the first housing 210 and the second housing 220 disposed to be foldable with respect to each other through the hinge device (e.g., the hinge device 264 of FIG. 3). According to certain embodiments, the pair of housings 210 and 220 are not limited to the shape and coupling illustrated in FIGS. 2A and 2B, and may be implemented by a combination and/or coupling of other shapes or parts. According to certain embodiments, the first housing 210 and the second housing 220 may be disposed at both sides based on the folding axis A1, and have an overall symmetrical shape with respect to the folding axis A1. According to some embodiments, the first housing 210 and the second housing 220 may be folded asymmetrically based on the folding axis A1. According to certain embodiments, the first housing 210 and the second housing 220 may have different angles or distances from each other according to whether the electronic device 200 is in an unfolded state, a folded state, or an intermediate state.

According to various embodiments, when the electronic device 200 is in an unfolded state, the first housing 210 may include a first surface 211 connected to the hinge device (e.g., the hinge device 264 of FIG. 3) and disposed to face the front of the electronic device 200, a second surface 212 facing in a direction opposite to that of the first surface 211, and/or a first side member 213 enclosing at least a portion of a first space between the first surface 211 and the second surface 212. According to certain embodiments, when the electronic device 200 is in an unfolded state, the second housing 220 may include a third surface 221 connected to the hinge device (e.g., the hinge device 264 of FIG. 3), and disposed to face the front of the electronic device 200, a fourth surface 222 facing in a direction opposite that of the third surface 221, and/or a second side member 223 enclosing at least a portion of a second space between the third surface 221 and the fourth surface 222. According to certain embodiments, the first surface 211 may face in substantially the same direction as that of the third surface 221 when the electronic device is in an unfolded state and at least partially face the third surface 221 when the electronic device is in a folded state. According to certain embodiments, the electronic device 200 may include a recess 201 formed to receive the first display 230 through structural coupling of the first housing 210 and the second housing 220. According to certain embodiments, the recess 201 may have substantially the same size as that of the first display 230.

According to various embodiments, the hinge cover 265 may be disposed between the first housing 210 and the second housing 220 and be disposed to cover a hinge device (e.g., the hinge device 264 of FIG. 3) disposed in the hinge cover 265. According to certain embodiments, the hinge cover 265 may be covered by a part of the first housing 210 and the second housing 220 or may be exposed to the outside according to an unfolded state, a folded state, or an intermediate state of the electronic device 200. For example, when the electronic device 200 is in an unfolded state, at least a portion of the hinge cover 265 may be covered by the first housing 210 and the second housing 220 to not be substantially exposed. According to certain embodiments, when the electronic device 200 is in a folded state, at least a portion of the hinge cover 265 may be exposed to the outside between the first housing 210 and the second housing 220. According to certain embodiments, when the first housing 210 and the second housing 220 are in an intermediate state folded with a certain angle, the hinge cover 265 may be at least partially exposed to the outside of the electronic device 200 between the first housing 210 and the second housing 220. For example, an area in which the hinge cover 265 is exposed to the outside may be smaller than that in a fully folded state. According to certain embodiments, the hinge cover 265 may include a curved surface.

According to various embodiments, when the electronic device 200 is in an unfolded state (e.g., the state of FIG. 2A), the first housing 210 and the second housing 220 form an angle of approximately 180 degrees, and a first area 230a, a folding area 230c, and a second area 230b of the first display 230 may form the same flat surface and be disposed to face in substantially the same direction. In another embodiment, when the electronic device 200 is in an unfolded state, the first housing 210 may rotate at an angle of approximately 360 degrees with respect to the second housing 220 so that the second surface 212 and the fourth surface 222 may be reversely folded to face each other (out-folding method).

According to various embodiments, when the electronic device 200 is in the folded state (e.g., the state of FIG. 2B), the first surface 211 of the first housing 210 and the third surface 221 of the second housing 220 may be disposed to face each other. In this case, the first area 230a and the second area 230b of the first display 230 may form a narrow angle (e.g., a range of 0 degree to approximately 10 degree) each other through the folding area 230c and be disposed to face each other. According to certain embodiments, at least a portion of the folding area 230c may be transformed into a curved shape having a predetermined curvature. According to certain embodiments, when the electronic device 200 is in an intermediate state, the first housing 210 and the second housing 220 may be disposed at a certain angle to each other. In this case, the first area 230a and the second area 230b of the first display 230 may form an angle larger than the folded state and smaller than the unfolded state, and a curvature of the folding area 230c may be smaller than that of the folded state and be larger than that of the unfolded state. In some embodiments, the first housing 210 and the second housing 220 may form an angle that may stop at a specified folding angle between the folded state and the unfolded state through the hinge device (e.g., the hinge device 264 of FIG. 3) (free stop function). In some embodiments, the first housing 210 and the second housing 220 may be operated while being pressurized in an unfolding direction or a folding direction based on a specified inflection angle through the hinge device (e.g., the hinge device 264 of FIG. 3).

According to various embodiments, the electronic device 200 may include at least one display 230 and 235, an input device 215, sound output devices 227 and 228, sensor modules 217a, 217b, and 226, camera modules 216a, 216b, and 225, a key input device 219, an indicator, or a connector port 229 disposed in the first housing 210 and/or the second housing 220. In some embodiments, the electronic device 200 may omit at least one of the components or may additionally include at least one other component.

According to various embodiments, the at least one display 230 and 235 may include a first display 230 (e.g., flexible display) disposed to receive support from the third surface 221 of the second housing 220 through the hinge device (e.g., the hinge device 264 of FIG. 3) from the first surface 211 of the first housing 210, and a second display 235 disposed to be visible at least partially from the outside through the fourth surface 222 in an inner space of the second housing 220. As another example, the second display 235 may be disposed to be visible from the outside through the second surface 212 in an inner space of the first housing 210. According to certain embodiments, the first display 230 may be mainly used in an unfolded state of the electronic device 200, and the second display 235 may be mainly used in a folded state of the electronic device 200. According to certain embodiments, when the electronic device 200 is in an intermediate state, the electronic device 200 may control the first display 230 and/or the second display 235 to be usable based on a folding angle of the first housing 210 and the second housing 220.

According to various embodiments, the first display 230 may be disposed in a receiving space formed by the pair of housings 210 and 220. For example, the first display 230 may be disposed in the recess 201 formed by the pair of housings 210 and 220, and when the electronic device 200 is in an unfolded state, the first display 230 may be disposed to occupy substantially most of the front surface of the electronic device 200. According to certain embodiments, the first display 230 may include a flexible display and at least a partial area of the flexible display may be transformed into a flat surface or a curved surface. According to certain embodiments, the first display 230 may include a first area 230a facing the first housing 210, a second area 230b facing the second housing 220, and a folding area 230c connecting the first area 230a and the second area 230b and facing the hinge device (e.g., the hinge device 264 of FIG. 3). According to certain embodiments, area division of the first display 230 is a physical division by the pair of housings 210 and 220 and the hinge device (e.g., the hinge device 264 of FIG. 3), and the first display 230 may be displayed as a substantially seamless single full screen through the pair of housings 210 and 220 and the hinge device (e.g., the hinge device 264 of FIG. 3). According to certain embodiments, the first area 230a and the second area 230b may have an overall symmetrical shape or a partially asymmetrical shape based on the folding area 230c.

According to various embodiments, the electronic device 200 may include a first rear cover 240 disposed at the second surface 212 of the first housing 210 and a second rear cover 250 disposed at the fourth surface 222 of the second housing 220. In some embodiments, at least a portion of the first rear cover 240 may be integrally formed with the first side member 213. In some embodiments, at least a portion of the second rear cover 250 may be integrally formed with the second side member 223. According to certain embodiments, at least one cover of the first rear cover 240 and the second rear cover 250 may be formed with a substantially transparent plate (e.g., a polymer plate or a glass plate including various coating layers) or an opaque plate. According to certain embodiments, the first rear cover 240 may be formed by an opaque plate such as, for example, coated or tinted glass, ceramic, polymer, metal (e.g., aluminum, stainless steel (STS), or magnesium), or a combination of at least two of the above materials. According to certain embodiments, the second rear cover 250 may be formed through a substantially transparent plate such as glass or polymer, for example. Accordingly, the second display 235 may be disposed to be visible from the outside through the second rear cover 250 in an inner space of the second housing 220.

According to various embodiments, the input device 215 may include a microphone. In some embodiments, the input device 215 may include a plurality of microphones disposed to detect a direction of a sound. According to certain embodiments, the sound output devices 227 and 228 may include speakers. According to certain embodiments, the sound output devices 227 and 228 may include a call receiver 227 disposed through the fourth surface 222 of the second housing 220 and an external speaker 228 disposed through at least a portion of the second side member 223 of the second housing 220. In some embodiments, the input device 215, the sound output devices 227 and 228, and the connector 229 may be disposed in spaces of the first housing 210 and/or the second housing 220 and be exposed to an external environment through at least one hole formed in the first housing 210 and/or the second housing 220. In some embodiments, holes formed in the first housing 210 and/or the second housing 220 may be commonly used for the input device 215 and the sound output devices 227 and 228. In some embodiments, the sound output devices 227 and 228 may include a speaker (e.g., piezo speaker) operating while excluding a hole formed in the first housing 210 and/or the second housing 220.

According to various embodiments, the camera modules 216a, 216b, and 225 may include a first camera module 216a disposed at the first surface 211 of the first housing 210, a second camera module 216b disposed at the second surface 212 of the first housing 210, and/or a third camera module 225 disposed at the fourth surface 222 of the second housing 220. According to certain embodiments, the electronic device 200 may include a flash 218 disposed near the second camera module 216b. According to certain embodiments, the flash 218 may include, for example, a light emitting diode or a xenon lamp. According to certain embodiments, the camera modules 216a, 216b, and 225 may include one or a plurality of lenses, an image sensor, and/or an image signal processor. In some embodiments, at least one camera module of the camera modules 216a, 216b, and 225 may include two or more lenses (e.g., wide-angle and telephoto lenses) and image sensors and be disposed together at any one surface of the first housing 210 and/or the second housing 220.

According to various embodiments, the sensor modules 217a, 217b, and 226 may generate an electrical signal or a data value corresponding to an internal operating state of the electronic device 200 or an external environmental state. According to certain embodiments, the sensor modules 217a, 217b, and 226 may include a first sensor module 217a disposed at the first surface 211 of the first housing 210, a second sensor module 217b disposed at the second surface 212 of the first housing 210, and/or a third sensor module 226 disposed at the fourth surface 222 of the second housing 220. In some embodiments, the sensor modules 217a, 217b, and 226 may include at least one of a gesture sensor, a grip sensor, a color sensor, an infrared (IR) sensor, an illuminance sensor, an ultrasonic sensor, an iris recognition sensor, or a distance detection sensor (e.g., time of flight (TOF) sensor or light detection and ranging (LiDAR)).

According to various embodiments, the electronic device 200 may further include a sensor module, for example, at least one of an atmospheric pressure sensor, a magnetic sensor, a biometric sensor, a temperature sensor, a humidity sensor, or a fingerprint recognition sensor. In some embodiments, the fingerprint recognition sensor may be disposed through at least one of the first side member 213 of the first housing 210 and/or the second side member 223 of the second housing 220.

According to various embodiments, the key input device 219 may be disposed to be exposed to the outside through the first side member 213 of the first housing 210. In some embodiments, the key input device 219 may be disposed to be exposed to the outside through the second side member 223 of the second housing 220. In some embodiments, the electronic device 200 may not include some or all of the key input devices 219, and the non-included key input devices 219 may be implemented into other forms such as soft keys on at least one display 230 and 235. As another embodiment, the key input device 219 may be implemented using a pressure sensor included in at least one display 230 and 235.

According to various embodiments, the connector port 229 may include a connector (e.g., USB connector or interface connector port module (IF module)) for transmitting and receiving power and/or data to and from an external electronic device. In some embodiments, the connector port 229 may further include a separate connector port (e.g., ear jack hole) for performing together a function for transmitting and receiving an audio signal to and from an external electronic device or for performing a function of transmitting and receiving an audio signal.

According to various embodiments, at least one camera module 216a and 225 of the camera modules 216a, 216b, and 225, at least one sensor module 217a and 226 of the sensor modules 217a, 217b, and 226, and/or the indicator may be disposed to be exposed through at least one display 230 and 235. For example, the at least one camera module 216a and 225, the at least one sensor module 217a and 226, and/or the indicator may be disposed under a display area of the first and second displays 230 and 235 in an interior space of at least one of the first housing 210 and the second housing 220 and be disposed to contact an external environment through an opening or transparent area perforated to a cover member (e.g., a window layer of the first display 230 and/or the second rear cover 250). According to certain embodiments, an area in which the first and second displays 230 and 235 and the at least one camera module 216a and 225 face each other is a part of an area displaying contents and may be formed as a transmission area having predetermined transmittance. According to certain embodiments, the transmission area may be formed to have transmittance in a range from approximately 5% to approximately 20%. Such a transmission area may include an area overlapped with an effective area (e.g., view angle area) of the at least one camera module 216a and 225 through which light for generating an image by an image sensor passes. For example, the transmission area of the first and second displays 230 and 235 may include an area having a lower pixel density than that of a peripheral area thereof. For example, the transmission area may replace the opening. For example, the at least one camera module 216a and 225 may include an under display camera (UDC). In another embodiment, some camera modules or sensor modules 217a and 226 may be disposed to perform functions thereof without being visually exposed through the display. For example, an area facing the camera modules 216a and 225 and/or the sensor modules 217a and 226 disposed under the first and second displays 230 and 235 (e.g., display panel) has an under display camera (UDC) structure; thus, a perforated opening may be unnecessary.

FIG. 3 is an exploded perspective view illustrating an electronic device according to an embodiment of the disclosure.

Referring to FIG. 3, the electronic device 200 may include a first display 230, a second display 235, a hinge device 264, a support member assembly 260, at least one printed circuit board 270, a first housing 210, a second housing 220, a first rear cover 240, and/or a second rear cover 250.

According to various embodiments, the first display 230 may include a display panel 231 (e.g., flexible display panel) and one or more plates 232 or layers in which the display panel 231 is seated. According to certain embodiments, the one or more plates 232 may include a conductive plate (e.g., copper (Cu) sheet or steel used stainless (SUS) sheet) disposed between the display panel 231 and the support member assembly 260. According to certain embodiments, the one or more plates 232 may be formed to have substantially the same area as that of the first display 230, and an area facing a folding area (e.g., the folding area 230c of FIG. 2A) of the first display 230 may be formed to be bendable. According to certain embodiments, the one or more plates 232 may include at least one auxiliary material layer (e.g., graphite member) disposed at a rear surface of the display panel 231. According to certain embodiments, the one or more plates 232 may be formed in a shape corresponding to the display panel 231.

According to various embodiments, the second display 235 may be disposed in a space between the second housing 220 and the second rear cover 250. According to certain embodiments, the second display 235 may be disposed to be visible from the outside through substantially the entire area of the second rear cover 250 in a space between the second housing 220 and the second rear cover 250.

According to various embodiments, the support member assembly 260 may include a first support member 261 (e.g., first support plate) and a second support member 262 (e.g., second support plate). According to certain embodiments, the first support member 261 may be foldably coupled to the second support member 262 through the hinge device 264. According to certain embodiments, the electronic device 200 may include at least one wiring member 263 (e.g., flexible printed circuit board (FPCB)) disposed from at least a portion of the first support member 261 across the hinge device 264 to a portion of the second support member 262. According to certain embodiments, the support member assembly 260 may be disposed between one or more plates 232 and at least one printed circuit board 270. According to certain embodiments, the first support member 261 may be disposed between the first area 230a of the first display 230 and a first printed circuit board 271. According to certain embodiments, the second support member 262 may be disposed between the second area 230b of the first display 230 and a second printed circuit board 272. According to certain embodiments, the at least one wiring member 263 and/or at least a portion of the hinge device 264 may be disposed to be supported through at least a portion of the support member assembly 260. According to certain embodiments, the at least one wiring member 263 may be disposed in a direction (e.g., x-axis direction) crossing the first support member 261 and the second support member 262. According to certain embodiments, the at least one wiring member 263 may be disposed in a direction (e.g., the x-axis direction) substantially perpendicular to the folding axis (e.g., the y-axis or the folding axis A of FIG. 2A) of the folding area 230c.

According to various embodiments, the at least one printed circuit board 270 may include a first printed circuit board 271 disposed to face the first support member 261 or a second printed circuit board 272 disposed to face the second support member 262. According to certain embodiments, the first printed circuit board 271 and the second printed circuit board 272 may be disposed in an inner space formed by the support member assembly 260, the first housing 210, the second housing 220, and the first rear cover 240, and/or the second rear cover 250. According to certain embodiments, the first printed circuit board 271 and the second printed circuit board 272 may include a plurality of electronic components disposed to implement various functions of the electronic device 200.

According to various embodiments, the electronic device 200 may include a first printed circuit board 271 disposed in a first space of the first housing 210, a first battery 291 disposed at a position facing a first swelling hole 2611 of the first support member 261, at least one camera module 282 (e.g., the first camera module 216a and/or the second camera module 216b of FIG. 2A), or at least one sensor module 281 (e.g., the first sensor module 217a and/or the second sensor module 217b of FIG. 2A). According to certain embodiments, the electronic device 200 may include a second printed circuit board 272 disposed in the second space of the second housing 220 or a second battery 292 disposed in a position facing a second swelling hole 2621 of the second support member 262. According to certain embodiments, the first housing 210 may be integrally formed with the first support member 261. According to certain embodiments, the second housing 220 may be integrally formed with the second support member 262.

According to various embodiments, the first housing 210 may include a first rotation support surface 214, and the second housing 220 may include a second rotation support surface 224 corresponding to the first rotation support surface 214. According to certain embodiments, the first rotation support surface 214 and the second rotation support surface 224 may include curved surfaces corresponding to (naturally connected to) a curved outer surface of the hinge cover 265. According to certain embodiments, when the electronic device 200 is in an unfolded state, the first rotation support surface 214 and the second rotation support surface 224 may cover the hinge cover 265, thereby not exposing the hinge cover 265 from the rear surface of the electronic device 200 or exposing only a portion thereof. According to certain embodiments, when the electronic device 200 is in a folded state, the first rotation support surface 214 and the second rotation support surface 224 may rotate along the curved outer surface of the hinge cover 265 to expose at least a portion of the hinge cover 265 to the rear surface of the electronic device 200.

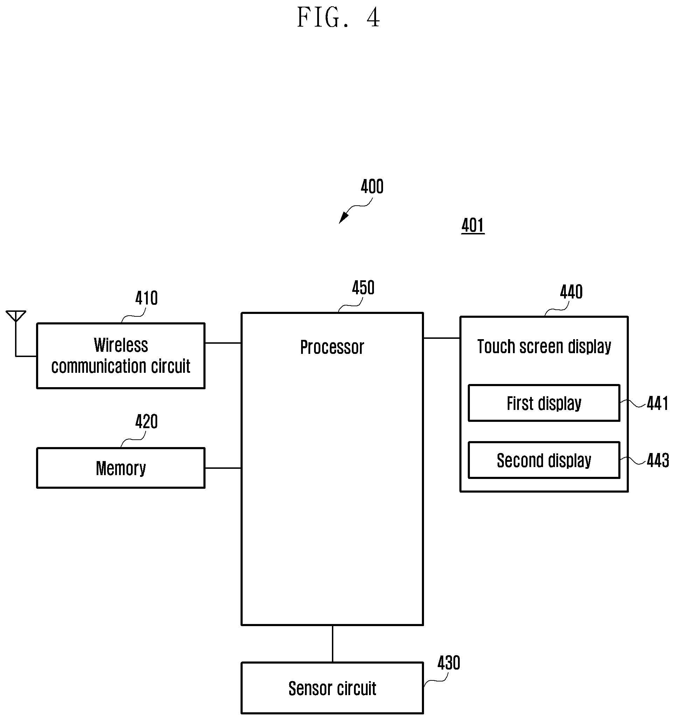

FIG. 4 is a block diagram illustrating an electronic device, according to an embodiment of the disclosure.

Referring to FIG. 4, block diagram 400 illustrates an electronic device 401 (e.g., the electronic device 101 of FIG. 1, the electronic device 200 of FIGS. 2A and 2B) may include a wireless communication circuit 410 (e.g., the communication module 190 of FIG. 1), a memory 420 (e.g., the memory 130 of FIG. 1), a sensor circuit 430 (e.g., the sensor module 176 of FIG. 1), a touch screen display 440 (e.g., the display module 160 of FIG. 1), and/or a processor 450 (e.g., the processor 120 of FIG. 1).

According to various embodiments of the disclosure, the wireless communication circuit 410 (e.g., the communication module 190 of FIG. 1) may establish a communication channel with an external electronic device (e.g., the electronic devices 102 and 104 and the server 108 of FIG. 1), and may support transmitting and receiving various data to and from the external electronic device.

According to various embodiments of the disclosure, the memory 420 (e.g., the memory 130 of FIG. 1) may store various data used by at least one element (e.g., the processor 450, the touch screen display 440, and/or the sensor circuit 430) of the electronic device 401. For example, the data may include information related to a sensor value for determining the unfolded state (e.g., the state of FIG. 2A) of the electronic device 401, a sensor value for determining the folded state (e.g., the state of FIG. 2B) of the electronic device 401, a layout configured according to the switching from an unfolded state to a folded state, a layout configured according to the switching from a folded state to an unfolded state, and/or usage history of the application (e.g., number of times used, time used, and/or run time).

According to various embodiments of the disclosure, the sensor circuit 430 (e.g., the sensor module 176 of FIG. 1) may detect the folding state of the electronic device 401. For example, the sensor circuit 430 may include a Hall sensor, an acceleration sensor, a gyro sensor, and/or a barometric pressure sensor.

According to various embodiments of the disclosure, the touch screen display 440 (e.g., the display module 160 of FIG. 1) may display an image under the control of the processor 450, and may be implemented as any one of a liquid crystal display (LCD), a light-emitting diode (LED) display, an organic light-emitting diode (OLED) display, a micro electro mechanical systems (MEMS) display, an electronic paper display, or a flexible display, but the disclosure is not limited thereto.

In an embodiment, when the electronic device 401 is in an unfolded state (e.g., the state of FIG. 2A), the touch screen display 440 may include a first display 441 (e.g., the first display 230 of FIG. 2A) having a first size. When the electronic device 401 is in an unfolded state, the first display 441 may be disposed in a space formed by a first housing (e.g., the first housing 210 of FIG. 2A) and a second housing (e.g., the second housing 220 of FIG. 2A).

In an embodiment, when the electronic device 401 is in a folded state (e.g., the state of FIG. 2B), the touch screen display 440 may include a second display 443 (e.g., the second display 235 of FIG. 2A) having a second size relatively smaller than the first size. When the electronic device 401 is in a folded state, the second display 443 may be disposed on a fourth surface (e.g., the fourth surface 222 of FIG. 2A) of the second housing 220.

In an embodiment, when the electronic device 401 is in an unfolded state, the first display 441 may be activated and the second display 443 may be deactivated. When the electronic device 401 is in a folded state, the first display 441 may be deactivated and the second display 443 may be activated.

According to various embodiments of the disclosure, the processor 450 (e.g., the processor 120 of FIG. 1) may control overall operation of the electronic device 401 and signal flow between internal elements of the electronic device 401 and perform data processing.

In an embodiment, the processor 450 may display screens of a plurality of applications on the first display 441 or the second display 443. The processor 450 may control the first display 441 or the second display 443 to display multiple windows when the electronic device 401 is in an unfolded state (e.g., the state of FIG. 2A) or a folded state (e.g., the state of FIG. 2B).

In an embodiment, based on the detection of the switching of the folding state of the electronic device 401 via the sensor circuit 430, the processor 450 may identify characteristics of the second display 443 or the first display 441 which is activated, attribute information related to each of a plurality of applications, and/or history information. For example, the switching of the folding state of the electronic device 401 may include the switching of the electronic device 401 from an unfolded state (e.g., the state of FIG. 2A) to a folded state (e.g., the state of FIG. 2B) or the switching of the electronic device 401 from a folded state (e.g., the state of FIG. 2B) to an unfolded state (e.g., the state of FIG. 2A).

In an embodiment, the characteristics of the second display 443 or the first display 441 which is activated may include the number of multiple windows supported according to the resolution, ratio (e.g., ratio of the horizontal length to the vertical length of an area), and size and/or the form of a layout to be supported (e.g., a horizontally and/or vertically split layout). Attribute information related to each of the plurality of applications may include category information of each application, information on the area where the screen of each application is arranged among a plurality of areas divided from a display region of the first display 441 or the second display 443 (e.g., location information), and/or information on whether an input interface (e.g., a keypad or a keyboard) of each application has been used. History information related to each of the plurality of applications may include information on the number of times of executions of each application, information on the execution time of each application, information on the number of times a user input has been detected on each screen, information on whether the application has been recently used, and/or information on the priority of each application.

In an embodiment, based on the characteristics of the second display 443 or the first display 441 which is activated, attribute information related to each of the plurality of applications, and/or history information, the processor 450 may configure a layout for arranging screens of a plurality of applications in the switched folding state. Based on the configured layout, the processor 450 may arrange the screens of the plurality of applications and display the same on the second display 443 or the first display 441.

According to various embodiments, an electronic device 401 may include a hinge module (e.g., the hinge device 264 of FIG. 3), a first housing (e.g., the first housing 210 of FIG. 2A) connected to the hinge device 264 and including a first surface (e.g., the first surface 211 of FIG. 2A), a second surface (e.g., the second surface 212 of FIG. 2A) facing a direction opposite to the first surface 211, and a first lateral surface (e.g., the first side member 213 of FIG. 2A) surrounding a first space between the first surface 211 and the second surface 212, a second housing (e.g., the second housing 220 of FIG. 2A) connected to the hinge device 264 to be foldable with respect to the first housing 210 and, in an unfolded state (e.g., the state of FIG. 2A), including a third surface (e.g., the third surface 221 of FIG. 2A) facing the same direction as the first surface 211, a fourth surface (e.g.. the fourth surface 222 of FIG. 2A) facing a direction opposite to the third surface, and a second lateral surface (e.g., the second side member 223 of FIG. 2A) surrounding a second space between the third surface 221 and the fourth surface 222, a first display 441 (e.g., the first display 230 of FIG. 2A) disposed from at least a part of the first surface 211 to at least a part of the third surface 221, a second display 443 (e.g., the second display 235 of FIG. 2A) disposed on at least a part of the fourth surface 222, a sensor circuit 430, and a processor 450 operatively connected to the first display 441, the second display 443, and the sensor circuit 430, wherein the processor 450 is configured to display screens of a plurality of applications on the first display 441 or the second display 443, based on the detection of the switching of the folding state of the electronic device 401 via the sensor circuit 430, identify characteristics of the second display 443 or the first display 441 which is activated, attribute information related to each of the plurality of applications, and/or history information, based on the characteristics of the second display 443 or the first display 441 which is activated, attribute information related to each of the plurality of applications, and/or history information, configure a layout to arrange the screens of the plurality of applications in the switched folding state, and, based on the configured layout, arrange the screens of the plurality of applications and display the same on the second display 443 or the first display 441.

The switching of the folding state of the electronic device 401 according to various embodiments may include the switching of the electronic device 401 from an unfolded state (e.g., the state of FIG. 2A) to a folded state (e.g., the state of FIG. 2B), of the switching of the electronic device 401 from a folded state to an unfolded state.

The characteristics of the second display 443 or the first display 441 which is activated, according to various embodiments, may include the number of multiple windows supported by the second display 443 or the first display 441 according to the resolution, ratio, and/or size and/or the form of a layout.

The attribute information related to each of the plurality of applications according to various embodiments may include category information of each of the plurality of applications, information on an area where each of the screens is arranged in the first display 441 or the second display 443, and/or information on whether an input interface has been used.

The history information related to each of the plurality of applications according to various embodiments may include information on the number of times of executions of each of the plurality of applications, information on the execution time of each application, information on the number of times a user input has been detected on each screen, information on whether the application has been recently used, and/or information on the priority of each application.

According to various embodiments, based on the characteristics of the second display 443 or the first display 441 which is activated, the attribute information related to each of the plurality of applications, and/or the history information, the processor 450 may be configured to determine the number of areas, the sizes of areas, and/or the arrangement of areas of the second display 443 or the first display 441 for displaying the screen of each application in the switched folding state, and configure the layout based on the determined number of areas, sizes of the areas, and/or arrangement of the areas.

According to various embodiments, based on the detection of the switching from the unfolded state (e.g., the state of FIG. 2A) to the folded state (e.g., the state of FIG. 2B) via the sensor circuit 430 while displaying screens of the plurality of applications on the first display 441 in the unfolded state (e.g., the state of FIG. 2A), the processor 450 may be configured to display at least one screen among the plurality of screens on the second display 443, and display at least one other screen as an icon in a partial area of the second display 443 or display the at least one other screen as a pop-up window on the second display 443.

According to various embodiments, based on the detection of the reception of an event while displaying screens of the plurality of applications on the first display 441 in the unfolded state (e.g., the state of FIG. 2A) and the detection of input which selects the received event, the processor 450 may be configured to configure a layout in the unfolded state based on the characteristics of the first display 441, attribute information related to each of the plurality of applications, and/or history information, and arrange screens of the plurality of applications and a screen of an application corresponding to the event in the configured layout in the unfolded state and display the same on the first display 441.

According to various embodiments, based on the detection of the reception of an event while displaying screens of the plurality of applications on the second display 443 in the folded state (e.g., the state of FIG. 2B) and the detection of the switching from the folded state to the unfolded state (e.g., the state of FIG. 2A) via the sensor circuit 430, the processor 450 may be configured to configure a layout in the unfolded state based on characteristics of the first display 441 which is activated, attribute information related to each of the plurality of applications, and/or history information, and arrange screens of the plurality of applications and a screen of an application corresponding to the event in the configured layout in the unfolded state and display the same on the first display 441.

According to various embodiments, based on the detection of designated input while displaying screens of the plurality of application on the first display 441 in the unfolded state (e.g., the state of FIG. 2A), the processor 450 may be configured to display, in a partial area of the first display 441, at least one item indicating a layout related to the arrangement of the screens of the plurality of applications in the unfolded state as a first form.

At least one item displayed in the first form according to various embodiments may include at least one item indicating a layout produced by a user and/or at least one item indicating a layout configured based on the characteristics of the second display 443 or the first display 441 which is activated, attribute information related to each application, and/or history information.

According to various embodiments, based on the detection of the switching from the unfolded state (e.g., the state of FIG. 2A) to the folded state (e.g., the state of FIG. 2B) via the sensor circuit 430, the processor 450 may be configured to change at least on item displayed as the first form to a second form showing a layout in the folded state to display the same in a partial area of the second display 443.

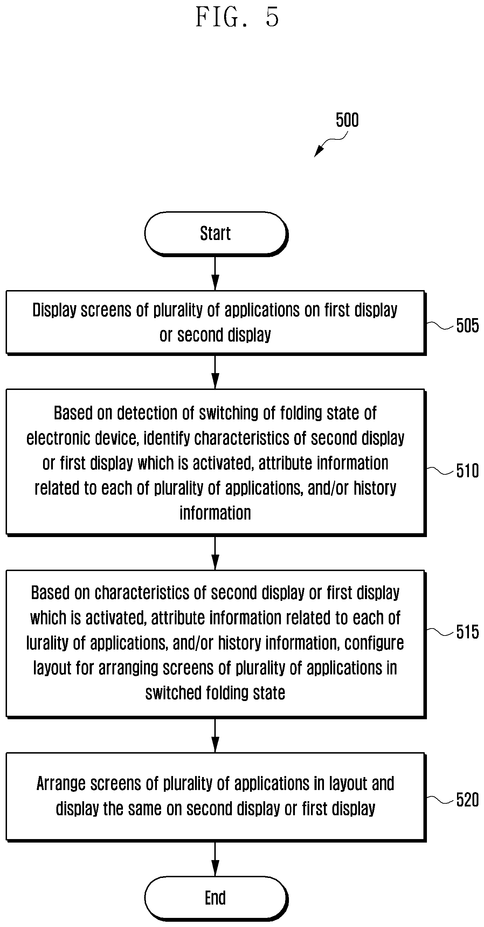

FIG. 5 is a flowchart for explaining a method of configuring a layout, based on the switching of the folding state of an electronic device, according to an embodiment of the disclosure.

Referring to FIG. 5, flowchart 500 illustrates that, in operation 505, a processor (e.g., the processor 450 of FIG. 4) of an electronic device (e.g., the electronic device 401 of FIG. 4) may display screens of a plurality of applications on a first display (e.g., the first display 441 of FIG. 4) or a second display (e.g., the second display 443 of FIG. 4).

According to an embodiment, in an unfolded state (e.g., the state of FIG. 2A) or a folded state (e.g., the state of FIG. 2B) of the electronic device 401, the processor 450 may control the first display 441 or the second display 443 to display multiple windows. For example, the processor 450 may control the first display 441 or the second display 443 to divide a display region of the first display 441 or the second display 443 into a plurality of areas and display the screen of each application via each area. The screen of each application displayed on each area may include a service screen of each application and/or a graphic user interface (GUI) related to each application.

In an embodiment, in operation 510, based on the detection of the switching of the folding state of the electronic device 401, the processor 450 may identify characteristics of the second display 443 or the first display 441 which is activated, attribute information related to each of a plurality of applications, and/or history information.

In an embodiment, for example, the switching of the folding state of the electronic device 401 may include a switching of the electronic device 401 from an unfolded state (e.g., the state of FIG. 2A) to a folded state (e.g., the state of FIG. 2B), or a switching of the electronic device 401 from a folded state (e.g., the state of FIG. 2B) to an unfolded state (e.g., the state of FIG. 2A). For example, based on movement information of a first housing (e.g., the first housing 210 of FIG. 2A) and a second housing (e.g., the second housing 220 of FIG. 2A) obtained by a sensor circuit (e.g., the sensor circuit 430 of FIG. 4), the electronic device 401 may identify whether the folding state of the electronic device 401 is switched from an unfolded state to a folded state, or switched from a folded state to an unfolded state.

In an embodiment, when the electronic device 401 is switched from an unfolded state (e.g., the state of FIG. 2A) to a folded state (e.g., the state of FIG. 2B), the display which is activated may be switched from the first display 441 to the second display 443. When the electronic device 401 is switched from a folded state (e.g., the state of FIG. 2B) to an unfolded state (e.g., the state of FIG. 2A), the display which is activated may be switched from the second display 443 to the first display 441.

In an embodiment, the characteristics of the display which is activated (e.g., the second display 443 or the first display 441) may include the resolution of the display, the ratio of the display (e.g., the ratio of the horizontal length to the vertical length of an area), the number of windows supported according to the size of the display, and/or the form of a layout to be supported (e.g., a horizontally and/or vertically divided layout).

For example, in an unfolded state (e.g., the state of FIG. 2A) of the electronic device 401, the resolution, ratio, and/or size of the first display 441 of a first size which is activated may be larger than the resolution, ratio, and/or size of the second display 443 having a second size relatively smaller than the first size.

In an embodiment, as the resolution, ratio, and/or size of the first display 441 of a first size are larger than the resolution, ratio, and/or size of the second display 443 of a second size relatively smaller than the first size, the number of windows supported by the first display 441 may be greater than the number of windows supported by the second display 443.

In an embodiment, as the resolution, ratio, and/or size of the first display 441 of a first size are larger than the resolution, ratio, and/or size of the second display 443 of a second size relatively smaller than the first size, the layout supported by the first display 441 may include a horizontally and/or vertically divided layout, and the layout supported by the second display 443 may include a horizontally divided layout.

In an embodiment, the attribute information related to each of the plurality of applications may include category information (e.g., video, social, communication, game, image, shopping, document, internet, tools) of each application, information (e.g., location information) on an area, in which the screen of each application is arranged, among a plurality of areas divided from the display region of the first display 441 or the second display 443, and/or information on whether an input interface (e.g., a keypad or keyboard displayed in software on a display (e.g., the touch screen display 440 in FIG. 4)) of each application has been used.

In an embodiment, the history information related to each of a plurality of applications may include information on the number of times of executions of each application, information on the execution time of each application, information on the number of times a user input is detected on each screen, information on whether an application has been used recently, and/or information on the priority of each application.

In an embodiment, in operation 515, based on characteristics of the second display 443 or the first display 441 which is activated, attribute information related to each of a plurality of applications, and/or history information, the processor 450 may configure a layout in which screens of a plurality of applications are arranged in the switched folding state. For example, the configuring of a layout in which screens of a plurality of applications are arranged in the switched folding state may include the number of areas, sizes of areas, and/or arrangement of areas to display the screen of each application.

For example, based on the number of multiple windows according to characteristics (e.g., a resolution, a size, and/or a ratio (e.g., the ratio of the horizontal length to the vertical length of the second display 443)) of a display (e.g., the second display 443 or the first display 441) activated in a switched folding state (e.g., a folded state or an unfolded state), the form of a layout, attribute information related to each of a plurality of applications, and/or history information, the processor 450 may determine positions (e.g., positions of areas, in which screens are disposed, among the divided areas) and the number of screens to be displayed on a display (e.g., the second display 443 or the first display 441) activated in the switched folding state among screens of a plurality of applications. Based on the determined number of screens and positions, the processor 450 may configure a layout to be displayed on a display (e.g., the second display 443 or the first display 441) activated in a switched folding state (e.g., a folded state or an unfolded state).

In various embodiments, the processor 450 may further consider previously configured layouts and/or the number of times previously configured layouts have been used, and thus configure a layout for displaying the screen of each application on a display (e.g., the second display 443 or the first display 441) in a switched folding state (e.g., a folded state or an unfolded state).

In an embodiment, in operation 520, the processor 450 may arrange screens of a plurality of applications in a layout and display the same on the second display 443 or the first display 441.

In an embodiment, although not shown, the processor 450 may arrange screens of a plurality of applications based on the configured layout, and adjust the size of at least one area among a plurality of areas based on the ratio of each of the plurality of areas divided in the layout (e.g., the ratio of the horizontal length to the vertical length of the area) and the ratio configured on the screen of the application arranged in each area.

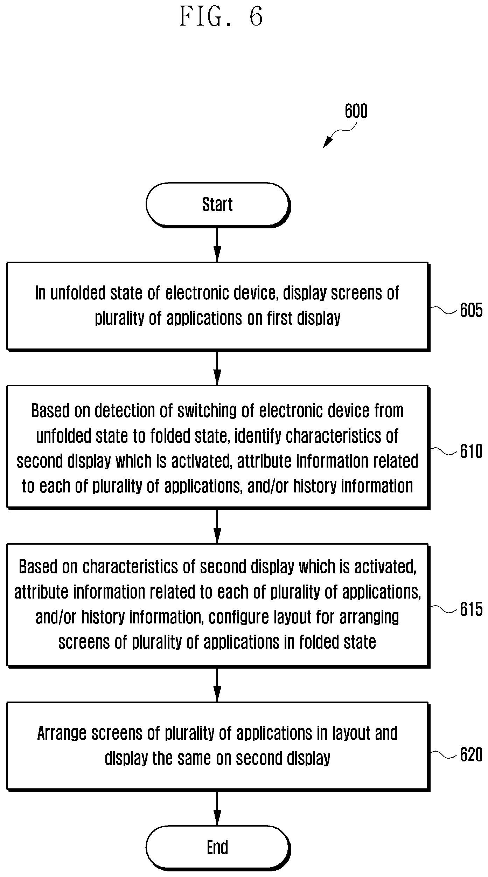

FIG. 6 is a flowchart for explaining a method of configuring a layout, based on the switching of the folding state of an electronic device from an unfolded state to a folded state, according to an embodiment of the disclosure.

Referring to FIG. 6, flowchart 600 illustrates that, in operation 605, a processor (e.g., the processor 450 of FIG. 4) of an electronic device (e.g., the electronic device 401 of FIG. 4) may display screens of a plurality of applications on a first display (e.g., the first display 441 of FIG. 4) in an unfolded state (e.g., the state of FIG. 2A) of the electronic device 401.

In an embodiment, when the electronic device 401 is in an unfolded state (e.g., the state of FIG. 2A), a first display 441 (e.g., the first display 230 of FIG. 2A) disposed in a space formed by a pair of housings (e.g., the first housing 210 and the second housing 220 of FIG. 2A) may be activated, and a second display (e.g., the second display 235 of FIG. 2A, the second display 443 of FIG. 4) disposed on a fourth surface (e.g., the fourth surface 222 of FIG. 2A) of the second housing 220 may be deactivated. The first display 441 may have a first size, and the second display 443 may have a second size relatively smaller than the first size.

In an embodiment, the processor 450 may control the first display 441 to divide the display region of the activated first display 441 in an unfolded state of the electronic device 401 into a plurality of areas and to display the screen of an application via each area.

In an embodiment, in operation 610, based on the detection of the switching of the electronic device 401 from an unfolded state (e.g., the state of FIG. 2A) to a folded state (e.g., the state of FIG. 2B), the processor 450 may identify characteristics of the second display 443 which is activated, attribute information related to each of a plurality of applications, and/or history information.

In an embodiment, based on movement information of the first housing 210 and the second housing 220 obtained via a sensor circuit (e.g., the sensor circuit 430 of FIG. 4), the processor 450 may identify whether the folding state of the electronic device 401 is switched to a folded state. If the folding state of the electronic device 401 is identified to be switched to a folded state, the processor 450 may identify characteristics of the second display 443 which is activated, attribute information related to a plurality of applications, and/or history information. For example, as the electronic device 401 is switched to a folded state, the first display 441 disposed in a space formed by a pair of housings 210 and 220 may be deactivated, and the second display 443 disposed on the fourth surface 222 of the second housing 220 may be activated. In order to configure a layout for displaying, on the activated second display 443, screens of a plurality of applications being displayed on the first display 441, the processor 450 may identify characteristics of the second display 443 which is activated, attribute information related to each application, and/or history information.

In an embodiment, the characteristics of the second display 443 which is activated may include the resolution of the second display 443, the ratio of the second display 443, the number of windows supported according to the size of the second display 443, and/or the form of a layout to be supported (e.g., a horizontally and/or vertically divided layout).

In an embodiment, the attribute information related to each of a plurality of applications may include category information of each application, information on an area where the screen of each application is arranged among a plurality of divided areas in the display region of the first display 441, and/or information on whether an input interface (e.g., a keypad or keyboard displayed in software) of each application has been used. The history information related to each of a plurality of applications may include information on the number of times of executions of each application, information on the execution time of each application, information on the number of times a user input has been detected on each screen, information on whether the application has been recently used, and/or information on the priority of each application.

In an embodiment, in operation 615, based on characteristics of the second display 443 which is activated, attribute information related to each of a plurality of applications, and/or history information, the processor 450 may configure a layout for arranging screens of a plurality of applications in a folded state.

In an embodiment, the processor 450 may configure a layout for displaying, on the activated second display 443, screens of a plurality of applications being displayed on the first display 441. For example, as the electronic device 401 is switched to a folding state, the activated second display 443 may have a second size relatively smaller than the first size of the first display 441, and thus the number of multiple windows (e.g., the number of divided areas) supported by the second display 443 may be different from the number of multiple windows (e.g., the number of divided areas) supported by the first display 441.

In an embodiment, based on the number of multiple windows according to the characteristics of the second display 443 (e.g., a resolution, a size, and/or a ratio (e.g., the ratio of the horizontal length to the vertical length of the second display 443)) of the second display 443, the form of a layout, attribute information related to each application, and/or history information, the processor 450 may determine the number of areas for displaying the screen of each application on the second display 443, the sizes of areas, and/or screens of applications to be arranged in the areas, and may configure a layout based thereon.

In an embodiment, in operation 620, the processor 450 may arrange screens of a plurality of applications in a layout, and display the same on the second display 443.

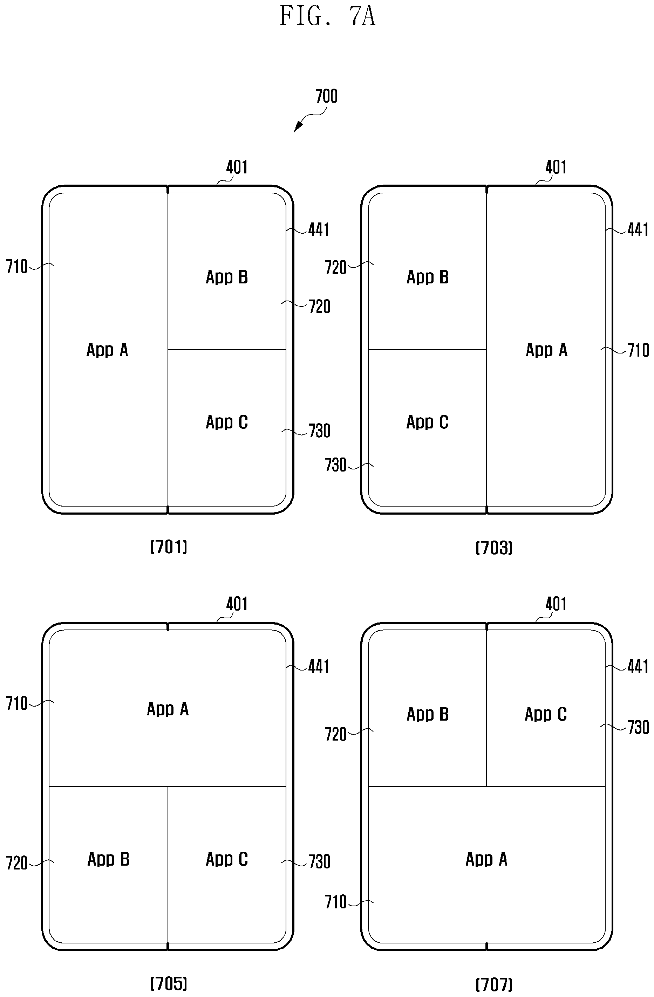

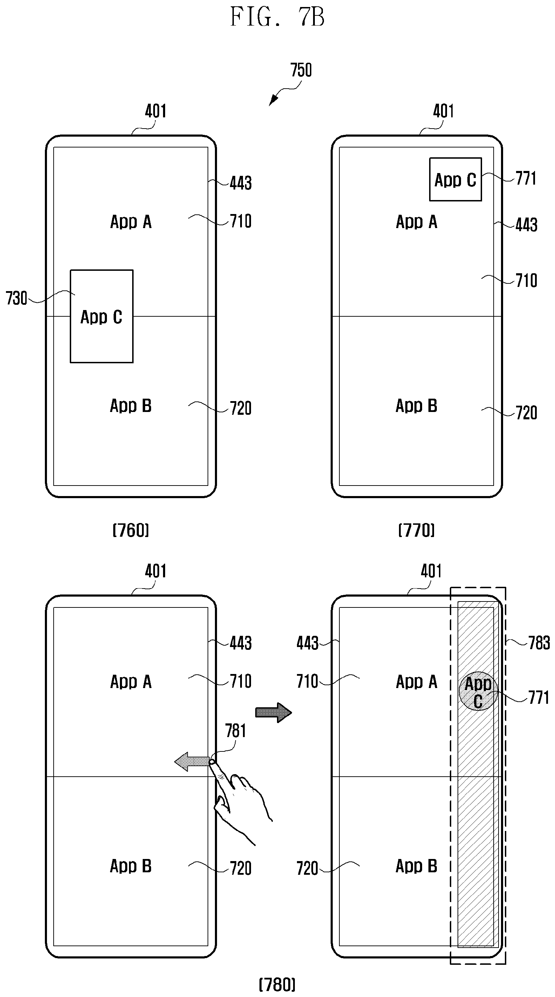

Based on the switching of the folding state of the electronic device of FIG. 6 described above from an unfolded state to a folded state, in relation to a method of configuring the layout, various embodiments will be described in FIGS. 7A and 7B to be described later.

FIGS. 7A and 7B are views for explaining a method for configuring a layout, based on the switching of the folding state of an electronic device from an unfolded state to a folded state, according to various embodiments of the disclosure.

Referring to FIG. 7A, view 700 illustrates that a processor (e.g., the processor 450 of FIG. 4) of an electronic device (e.g., the electronic device 401 of FIG. 4) may display, on a first display (e.g., the first display 441 of FIG. 4), screens of a plurality of applications in an unfolded state (e.g., the state of FIG. 2A) of the electronic device 401.

In FIG. 7A, according to various embodiments, descriptions will be made under the assumption that, by the execution of a plurality of applications, for example, three applications, three screens therefor are displayed on each area of the first display 441 divided into three areas. The disclosure is not limited thereto, and when more than three applications are executed, the processor 450 may divide the first display 441 into areas exceeding three and display the screen of each application in each area.

For example, as shown in the figure indicated by reference numeral <701>, the processor 450 may display a first screen 710 of application A in a first area (e.g., a left area) of the three areas of the first display 441, display a second screen 720 of application B in a second area (e.g., an upper right area), and display a third screen 730 of application C in a third area (e.g., a lower right area).

As another example, as shown in the figure indicated by reference numeral <703>, the processor 450 may display a second screen 720 of application B in a first area (e.g., an upper left area) of the three areas of the first display 441, display a third screen 730 of application C in a second area (e.g., a lower left area), and display a first screen 710 of application A in a third area (e.g., a right area).

As still another example, as shown in the figure indicated by reference numeral <705>, the processor 450 may display a first screen 710 of application A in a first area (e.g., an upper area) of the three areas of the first display 441, display a second screen 720 of application B in a second area (e.g., a left lower area), and display a third screen 730 of application C in a third area (e.g., a right lower area).

As still another example, as shown in the figure indicated by reference numeral <707>, the processor 450 may display a second screen 720 of application B in a first area (e.g., a left upper area) of the three areas of the first display 441, display a third screen 730 of application C in a second area (e.g., a right upper area), and display a first screen 710 of application A in a third area (e.g., a lower area).

The figures indicated by reference numerals <701>, <703>, <705>, and <707> according to various embodiments are one embodiment, and the disclosure is not limited embodiments. For example, the screen of an application arranged in each area according to the attribute information of each application may be different.

Referring to FIG. 7B, view 750 illustrates that the processor 450 may detect the switching of the electronic device 401 from an unfolded state (e.g., the state of FIG. 2A) to a folded state (e.g., the state of FIG. 2B) via a sensor circuit (e.g., the sensor circuit 430 of FIG. 4).

In an embodiment, based on the detection of the switching of the electronic device 401 from an unfolded state to a folded state, the processor 450 may deactivate the first display 441 and activate the second display 443. Based on the activation of the second display 443 due to the switching of the folding state (e.g., the switching to a folded state) of the electronic device 401, in order to configure a layout for displaying, on the activated second display 443, a first screen 710 of application A, a second screen 720 of application B, and a third screen 730 of application C, which are being displayed on the first display 441, the processor 450 may identify characteristics of the second display 443 which is activated, attribute information of each of application A, application B, and application C, and/or history information.

In an embodiment, the characteristics of the second display 443 which is activated may include the resolution of the second display 443, the ratio of the second display 443, the number of windows supported according to the size of the second display 443, and/or the form of a layout to be supported (e.g., a horizontally and/or vertically divided layout). The attribute information related to each of a plurality of applications may include category information of each application, information on an area where the screen of each application is arranged among a plurality of divided areas in the display region of the first display 441, and/or information on whether an input interface (e.g., a keypad or keyboard displayed in software) of each application has been used. The history information related to each of a plurality of applications may include information on the number of times of executions of each application, information on the execution time of each application, information on the number of times a user input has been detected on each screen, information on whether the application has been recently used, and/or information on the priority of each application.

In an embodiment, the size of the first display 441 may be relatively larger than the size of the second display 443, and accordingly, the number of multiple windows supported by the first display 441 may be different from the number of multiple windows supported by the second display 443. For example, the number of multiple windows supported by the first display 441 may be greater than the number of multiple windows supported by the second display 443.

The disclosure is not limited thereto, and as the size of the first display 441 is relatively larger than the size of the second display 443, the form of a layout supported by the first display 441 may also be different from the form of a layout supported by the second display 443. For example, the form of a layout supported by the first display 441 may include a horizontally and/or vertically divided form, and the form of a layout supported by the second display 443 may include a horizontally divided form.

In various embodiments, when explaining under the assumption that the number of multiple windows supported by the first display 441 is three or more, the form of a layout supported by the first display 441 is a layout of a horizontally and/or vertically divided form, the number of multiple windows supported by the second display 443 is two, and the form of a layout supported by the second display 443 is a layout of a horizontally divided form, in order to display, on the second display 443, three screens 710, 720, and 730 being displayed on the first display 441, a layout may be configured to display two screens in a multi-window form in two horizontally divided areas and to display the other screen in a different form (e.g., a pop-up window, an icon, or an overlapping display).

In an embodiment, the area (or position) where each of the two screens displayed in a multi-window form on the second display 443 is arranged may be determined based on the display order, execution time, and priority of each application on the first display 441 in an unfolded state of the electronic device 401.

For example, based on the history information and/or attribute information of each of application A, application B, and application C, the processor 450 may configure a layout to display, in a multi-window form, a screen of an application including content optimized for viewing such as multimedia (e.g., video or music), a screen of an application capable of using an input interface (e.g., memo application, communication application (e.g., message application, social network service (SNS) application)), a screen of a search application, a screen of a high-priority application, and/or a screen of a frequently used application.

As another example, based on the history information and/or attribute information of each of application A, application B, and application C, the processor 450 may configure a layout to display, in a different form (e.g., a pop-up window, an icon, or an overlapping display), an application related to tools and/or an application which has previously been displayed in a different form.

In an embodiment, based on the configured layout, the processor 450 may display a first screen 710 of application A, a second screen 720 of application B, and a third screen 730 of application C on the second display 443.

Referring to FIG. 7B, descriptions will be made under the assumption that a layout is configured to display a first screen 710 of application A and a second screen 720 of application B in a multi-window form, and to display a third screen 730 of application C in a different form.

For example, as shown in the figure indicated by reference numeral <760>, based on the number (e.g., two) of multiple windows supported by the second display 443 and the form of a layout to be supported (e.g., a layout of a horizontally divided form), the processor 450 may divide the second display 443 into two areas, for example, an upper area and a lower area. The processor 450 may control the second display 443 to display a first screen 710 of application A in a first area of the two divided areas and to display a second screen 720 of application B in a second area thereof. The processor 450 may control the second display 443 to display a third screen 730 of application C to partially overlap the first screen 710 and/or the second screen 720 or to display the same as a pop-up window.

As another example, as shown in the figure indicated by reference numeral <770>, instead of displaying a third 730 of application C, the processor 450 may display an icon 771 capable of executing application C. For example, an icon 771 capable of executing application C may be displayed in a partial area of the first screen 710 (or the second screen 720). The disclosure is not limited thereto, and as shown in the figure indicated by reference numeral <780>, the processor 450 may display an icon 771 capable of executing application C on a third area 783 of the second display 443. For example, the third area 783 may be a hidden area. For example, in a state where a first screen 710 of application A is displayed in a first area of the second display 443 and a second screen 720 of application B is displayed in a second area thereof, the processor 450 may detect a designated input 781 to display the third area 783. Based on the detection of the designated input 781, the processor 450 may control the second display 443 to display the third area 783 including the icon 771 capable of executing application C.

In various embodiments, although not shown, the third area 783 may include at least on icon for at least one application (e.g., at least one frequently used application) added by a user, as well as the icon 771 capable of executing application C. The processor 450 may allow the icon 771 capable of executing application C to be disposed in an area above at least one icon for a frequently used application. Accordingly, when the third area 783 is display by the designated input 781, a user may easily execute application C displayed via the first display 411 in an unfolded state.

In various embodiments, although not shown, when the switching from the folded state of FIG. 7B to an unfolded state is detected, the processor 450 may display a first screen 710 of application A in a first area, display a second screen 7220 of application B in a second area, and a third screen 730 of application C in a third area, among the three areas of the first display 441 of FIG. 7A described above.

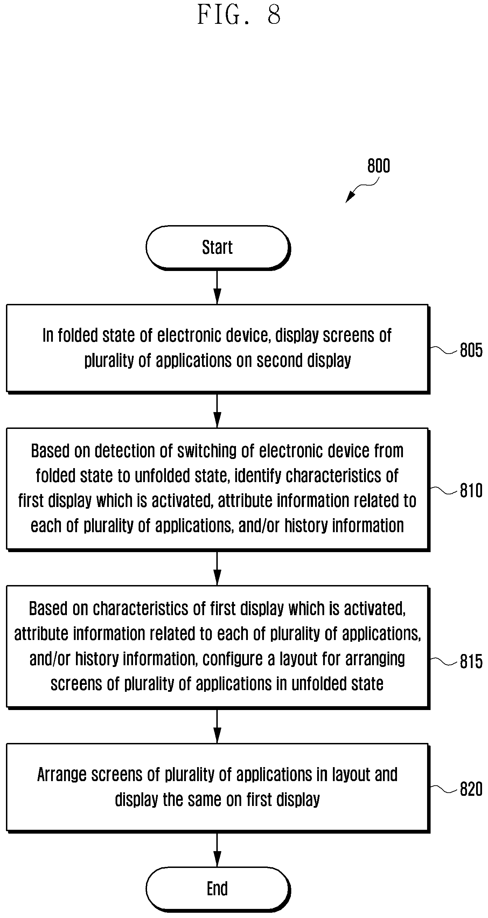

FIG. 8 is a flowchart for explaining a method for configuring a layout, based on the switching of the folding state of an electronic device from a folded state to an unfolded state, according to an embodiment of the disclosure.

Referring to FIG. 8, flowchart 800 illustrates that, in operation 805, in a folded state (e.g., the state of FIG. 2B) of the electronic device 401, a processor (e.g., the processor 450 of FIG. 4) of an electronic device (e.g., the electronic device 401 of FIG. 4) may display screens of a plurality of applications on a second display (e.g., the second display 443 of FIG. 4).

In an embodiment, when the electronic device 401 is in a folded state (e.g., the state of FIG. 2B), a first display (e.g., the first display 441 of FIG. 4) (e.g., the first display 230 of FIG. 2A) disposed in a space formed by a pair of housings (e.g., the first housing 210 and the second housing 220 of FIG. 2A) may be deactivated, and a second display 443 (e.g., the second display 235 of FIG. 2A) disposed on a fourth surface (e.g., the fourth surface 222 of FIG. 2A) of the second housing 220 may be activated. The size of the second display 443 may be relatively smaller than the size of the first display 441.

In an embodiment, in a folded state of the electronic device 401, the processor 450 may control the second display 443 to divide the display region of the activated second display 443 into a plurality of areas and to display a screen of an application via each area.

In an embodiment, in operation 810, based on the detection of the switching of the electronic device 401 from a folded state (e.g., the state of FIG. 2B) to an unfolded state (e.g., the state of FIG. 2A), the processor 450 may identify characteristics of the first display 441 which is activated, attribute information related to each of a plurality of applications, and/or history information.

In an embodiment, based on movement information of the first housing 210 and the second housing 220 obtained by a sensor circuit (e.g., the sensor circuit 430 of FIG. 4), the processor 450 may identify whether the folding state of the electronic device 401 is switched to an unfolding state. If it is identified that the folding state of the electronic device 401 is switched to an unfolded state, the processor 450 may identify characteristics of the first display 441 which is activated, attribute information related to each of a plurality of applications, and/or history information. For example, as the electronic device 401 is switched to an unfolded state, the first display 441 disposed in a space formed by a pair of housings 210 and 220 may be activated, and the second display 443 disposed on the fourth surface 222 of the second housing 220 may be deactivated. In order to configure a layout for displaying, on the activated first display 441, the screens of a plurality of applications which have been displayed on the second display 443 before the switching of the folding state, the processor 450 may identify characteristics of the first display 441 which is activated, attribute information related to each application, and/or history information.

In an embodiment, in operation 815, based on characteristics of the first display 441 which is activated, attribute information related to each of a plurality of applications, and/or history information, the processor 450 may configure a layout for arranging screens of a plurality of applications in an unfolded state.

In an embodiment, the processor 450 may configure a layout for displaying, on the activated first display 441, screens of a plurality of applications which have been displayed on the second display 443 before the folding state is switched. For example, the size of the first display 441 activated according to the switching of the electronic device 401 to an unfolded state may be relatively larger than the size of the second display 443, and accordingly, the number (e.g., the number of divided areas) of multiple windows supported by the first display 441 may be different from the number (e.g., the number of divided areas) of multiple windows supported by the second display 443. For example, the number of multiple windows supported by the first display 441 may be greater than the number of multiple windows supported by the second display 443, and an additional window may be applied according to the switching of the electronic device 401 to an unfolded state.

The disclosure is not limited thereto, as the size of the first display 441 is relatively larger than the size of the second display 443, the form of a layout supported by the first display 441 may also be different from the form of a layout supported by the second display 443. For example, the form of a layout supported by the first display 441 may include a layout of a horizontally and/or vertically divided form, the form of a layout supported by the second display 443 may include a layout of a horizontally divided form.

In an embodiment, based on the number of multiple windows according to the characteristics of the first display 441 (e.g., a resolution, a size, and/or a ratio (e.g., the ratio of the horizontal length to the vertical length of the first display 441)) of the first display 441, the form of a layout, attribute information related to each application, and/or history information, the processor 450 may determine the number of areas for displaying the screen of each application on the first display 441, the sizes of areas, and/or screens of applications to be arranged in the areas, and may configure a layout based thereon.

In an embodiment, in operation 820, the processor 450 may arrange screens of a plurality of applications in a layout, and display the same on the first display 441.

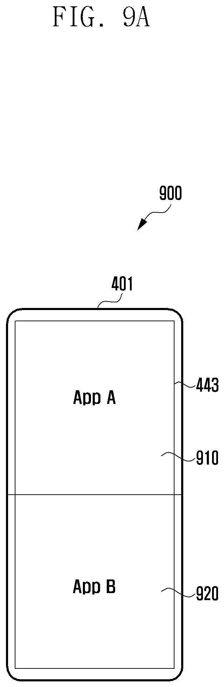

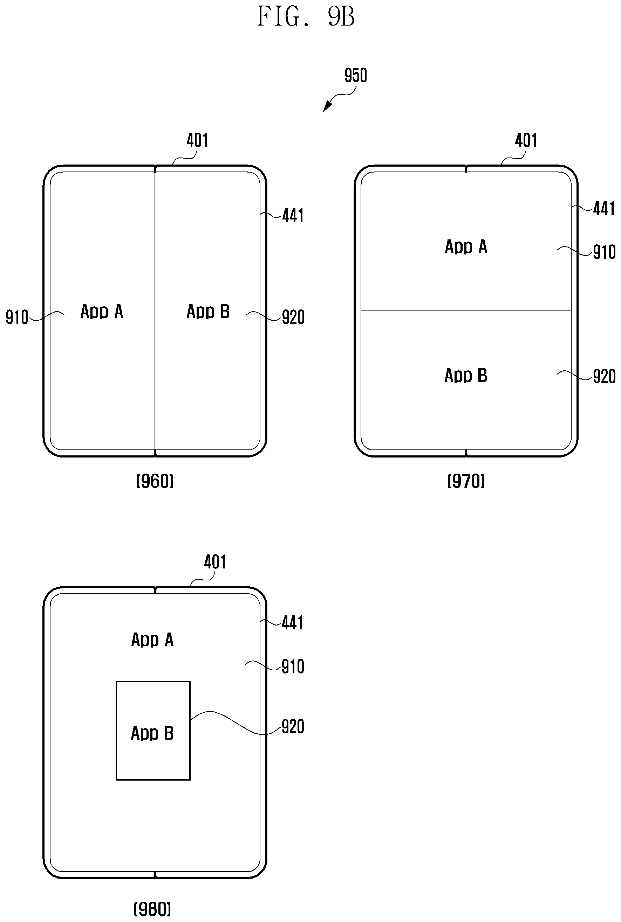

Based on the switching of the folding state of the electronic device 401 of FIG. 8 described above from a folded state to an unfolded state, various embodiments will be explained in FIGS. 9A and 9B to be described later, in relation to a method for configuring a layout.

FIGS. 9A and 9B are views for explaining a method for configuring a layout, based on the switching of the folding state of an electronic device from a folded state to an unfolded state, according to various embodiments of the disclosure.

Referring to FIG. 9A, view 900 illustrates that a processor (e.g., the processor 450 of FIG. 4) of an electronic device (e.g., the electronic device 401 of FIG. 4) may display screens of a plurality of applications on a second display (e.g., the second display 443 of FIG. 4) in a folded state (e.g., the state of FIG. 2B) of the electronic device 401.

Referring to FIG. 9A, descriptions will be made under the assumption of displaying two screens corresponding to the execution of a plurality of applications, for example, two applications, on each area of the second display 443 divided into two areas.

In an embodiment, the processor 450 may display a first screen 910 of application A in a first area among two areas of the second display 443, and display a second screen 920 of application B in a second area thereof. The disclosure is not limited thereto, although not shown, the processor may display a second screen 920 of application B in the first area, and display a first screen 910 of application A in the second area.

Referring to FIG. 9B, view 950 illustrates that the processor 450 may detect the switching of the electronic device 401 from a folded state (e.g., the state of FIG. 2B) to an unfolded state (e.g., the state of FIG. 2A) via a sensor circuit (e.g., the sensor circuit 430 of FIG. 4).

In an embodiment, based on the detection of the switching from a folded state to an unfolded state, the processor 450 may identify characteristics of the first display 441 which is activated, attribute information of each of application A and application B, and/or history information.

In an embodiment, based on the detection of the switching of the electronic device 401 from a folded state to an unfolded state, the processor 450 may allow the second display 443 to be deactivated and allow the first display 441 which is activated. Based on the activation of the first display 441 due to the switching of the folding state of the electronic device 401, in order to configure a layout for displaying, on the activated first display 441, a first screen 910 of application A and a second screen 920 of application B which have been displayed on the second display 443, the processor 450 may identify characteristics of the first display 441 which is activated, attribute information on each of application A and application B, and/or history information. The configuring of a layout in an unfolded state may include the number of areas for displaying a first screen 910 of application A and a second screen 920 of application B, the sizes of the areas, and/or the positions of the areas to be arranged.

In various embodiments, although it has been described that the layout is configured to display the first screen 910 of application A and the second screen 920 of application B on the first display 441, but the disclosure is not limited thereto. For example, in a folded state of the electronic device 401, as shown in FIG. 7B described above, the first screen of application A, the second screen of application B, and the third screen of application C (or an icon capable of executing application C) may be displayed on the second display 443. The size of the first display 441 may be relatively larger than the size of the second display 443, and accordingly, the number of multiple windows supported by the first display 441 may be greater than the number of multiple windows supported by the second display 443. As the number of multiple windows supported by the first display 441 is greater, when the electronic device 401 is switched to an unfolded state, a layout where an additional window to display a third screen of application C is applied may be configured to display a first screen of application A, a second screen of application B, and a third screen of application C on the first display 441.

The disclosure is not limited thereto, as the size of the first display 441 is relatively larger than the size of the second display 443, the form of a layout supported by the first display 441 may also be different from the form of a layout supported by the second display 443. For example, the form of a layout supported by the first display 441 may include a layout of a horizontally and/or vertically divided form, and the form of a layout supported by the second display 443 may include a layout of a horizontally divided form.

In an embodiment, the processor 450 may display a first screen 910 of application A and a second screen 920 of application B on the first display 441 based on the configured layout.

In an embodiment, as a result of identifying the attribute information of each of application A and application B, when application A and application B are applications which include content optimized for viewing, such as multimedia (e.g., video or music), or applications capable of using an input interface (e.g., memo applications, communication applications (e.g., message applications, social network service (SNS) applications), and/or search applications, as shown in the figures indicated by reference numerals <960> and <970> to be described later, a layout in which the second display 443 is divided left and right or up and down (e.g., a layout divided vertically or a layout divided horizontally) may be configured.

For example, as shown in the figure indicated by reference numeral <960>, the processor 450 may divide the first display 441 into two areas, for example, left and right areas (e.g., vertically). The processor 450 may display a first screen 910 of application A in a first area (e.g., the left area) of the two vertically divided areas, and display a second screen 920 of application B in a second area (e.g., the right area).

The disclosure is not limited thereto, and, although not shown, based on characteristics of the first display 441 which is activated, attribute information of each of application A and application B, and/or history information, the processor 450 may display a second screen 920 of application B in a first area of the first display 441, and display a first screen 910 of application A in a second area.

As another example, as shown in the figure indicated by reference numeral <970>, the processor 450 may divide the first display 441 into two areas, for example, divide the same up and down (e.g., divide horizontally). The processor 450 may display a first screen 910 of application A in a first area (e.g., an upper area) of the two horizontally divided areas, and display a second screen 920 of application B in a second area (e.g., a lower area).

In an embodiment, based on the result of identifying the attribute information of each of application A and application B, when application A is an application related to multimedia, or an application capable of using an input interface, and/or a search application, and application B is an application related to a tool, the processor 450 may configure a layout as shown in the figure indicated by reference numeral <980>. For example, as shown in the figure indicated by reference numeral <980>, the processor 450 may display a first screen 910 of application A in the entire display region of the first display 441, and display a second screen 920 of application B to overlap a partial area of the first screen 910 or display the second screen as a pop-up window.

In various embodiments, further considering previously configured layouts and/or the number of times previously configured layouts have been used, the processor 450 may configure a layout to display the screen of each application on a display (e.g., the first display 441) in a switched folding state (e.g., an unfolded state).

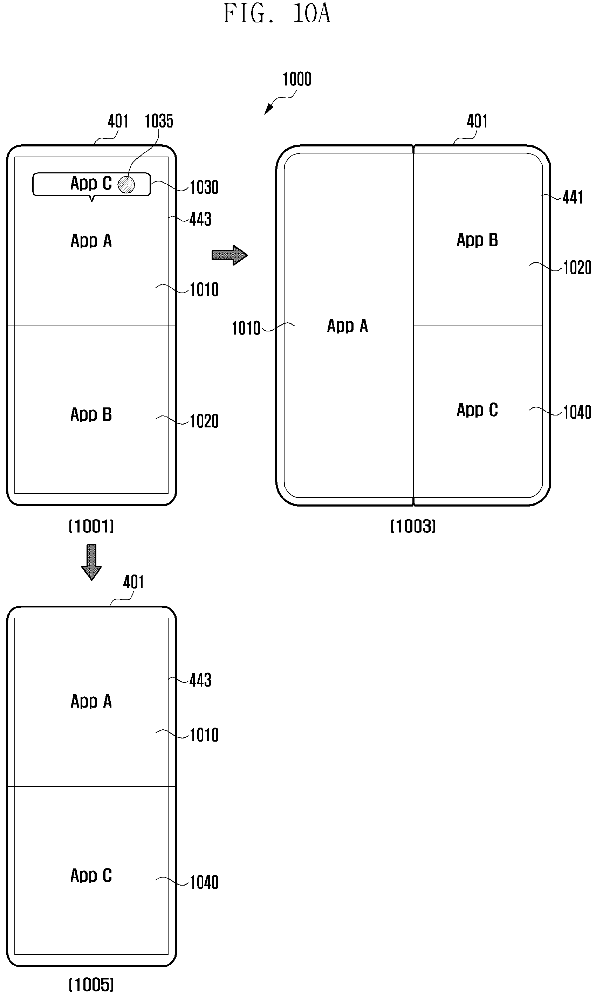

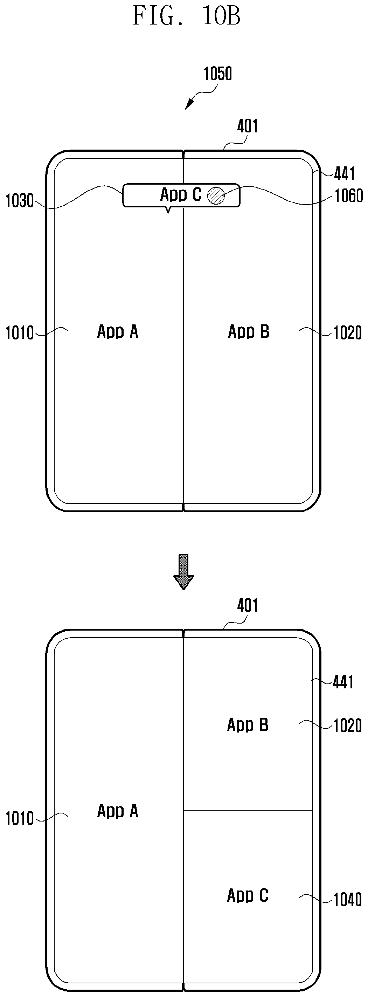

FIGS. 10A and 10B are views for explaining a method for configuring a layout, based on the reception of an event, according to various embodiments of the disclosure.

Referring to FIG. 10A, view 1000 illustrates that, as shown in the figure indicated by reference numeral <1001>, a processor (e.g., the processor 450 of FIG. 4) of an electronic device (e.g., the electronic device 401 of FIG. 4) may display screens of a plurality of applications on a second display (e.g., the second display 443 of FIG. 4) in a folded state (e.g., the state of FIG. 2B) of the electronic device 401. For example, the processor 450 may divide the second display 443 into two areas, for example, divide the same up and down, and may display a first screen 1010 of application A in a first area (e.g., an upper area) of the two divided areas and display a second screen 1020 of application B in a second area (e.g., a lower area) thereof.

In an embodiment, while displaying a first screen 1010 of application A in a first area of the second display 443 and displaying a second screen 1020 of application B in a second area thereof, the processor 450 may detect the reception of an event related to application C. Based on the reception of an event, the processor 450 may display a notification 1030 notifying that an event related to application C has been received in a partial area of the second display 443.

In an embodiment, while displaying, in a partial area of the second display 443, a notification 1030 notifying that an event related to application C has been received, the processor 450 may detect the switching of the electronic device 401 from a folded state (e.g., the state of FIG. 2B) to an unfolded state (e.g., the state of FIG. 2A) via a sensor circuit (e.g., the sensor circuit 430 of FIG. 4). Based on the detection of the switching from a folded state to an unfolded state, the processor 450 may identify characteristics of the first display 441 which is activated, attribute information of each of application A, application B, and application C, and/or history information.

In an embodiment, based on the characteristics of the first display 441 which is activated, attribute information of each of application A, application B, and application C, and/or history information, the processor 450 may configure a layout in an unfolded state of the electronic device 401. For example, as shown in the figure indicated by reference numeral <1003>, based on a layout (e.g., a horizontally and vertically divided layout) where a first display (e.g., the first display 441 of FIG. 4) is divided into three areas, the processor 450 may display a first screen 1010 of application A in a first area of the three horizontally and vertically divided areas, display a second screen 1020 of application B in a second area thereof, and a third screen 1040 of application C in a third area thereof.

The disclosure is not limited thereto, although not shown, based on characteristics of the first display 441 which is activated, attribute information of each of application A, application B, and application C, and/or history information, the processor 450 may display a second screen 1020 (or a third screen 1040 of application C) of application B in a first area of the first display 441, display a third screen 1040 (or a first screen 1010 of application A) of application C in a second area thereof, and display a first screen 1010 (or a second screen 1020 of application B) of application A in a third area thereof.

In various embodiments, while displaying, in a partial area of the second display 443, a notification 1030 notifying that an event related to application C has been received, the processor 450 may detect input 1035 selecting the notification 1030. Based on the detection of the input 1035 selecting the notification 1030, the processor 450 may reconfigure the layout in the folded state of the electronic device 401. For example, as shown in the figure indicated by reference numeral <1005>, based on characteristics of the second display 443, attribute information of each of application A, application B, and application C, and/or history information, the processor 450 may display a first screen 1010 of application A in a first area of the second display 443, and display a third screen 1040 of application C in a second area thereof. The second screen 1020 of application B previously displayed in the second area may not be displayed. The processor 450 may display application B as an icon capable of executing application B, as shown in the figures indicated by reference numerals <770> and <780> of FIG. 7B described above.

The disclosure is not limited thereto, although not shown, in a state of displaying a first screen 1010 of application A in the first area and display a second screen 1020 of application B in the second area, based on the detection of the input 1035 selecting the notification 1030, the processor 450 may display a third screen 1040 of application C as a pop-up window, as shown in the figure indicated by reference numeral <760> of FIG. 7B described above.

Referring to FIG. 10B, view 1050 illustrates that the processor 450 may display screens of a plurality of applications on the first display 441 in an unfolded state (e.g., the state of FIG. 2A) of the electronic device 401. For example, the processor 450 may divide the first display 441 into two areas, for example, divide the same left and right, and may display a first screen 1010 of application A in a first area of the two divided areas and display a second screen 1020 of application B in a second area thereof.

In an embodiment, while displaying a first screen 1010 of application A in a first area of the first display 441 and displaying a second screen 1020 of application B in a second area thereof, the processor 450 may detect the reception of an event related to application C. Based on the reception of an event, the processor 450 may display a notification 1030 notifying that an event related to application C has been received, in a partial area of the first display 441.

In an embodiment, the processor 450 may detect a user input 1060 selecting a notification 1030 notifying that an event related to application C has been received. Based on the detection of a user input 1060 selecting a notification 1030, the processor 450 may identify characteristics of the first display 441, attribute information of each of application A, application B, and application C, and/or history information.

In an embodiment, based on the characteristics of the first display 441, attribute information of each of application A, application B, and application C, and/or history information, the processor 450 may reconfigure a layout in an unfolded state of the electronic device 401. For example, based on a layout (e.g., a horizontally and vertically divided layout) where the first display 441 is divided into three areas, the processor 450 may display a first screen 1010 of application A in a first area of the three divided areas, display a second screen 1020 of application B in a second area thereof, and display a third screen 1040 of application C in a third area thereof.

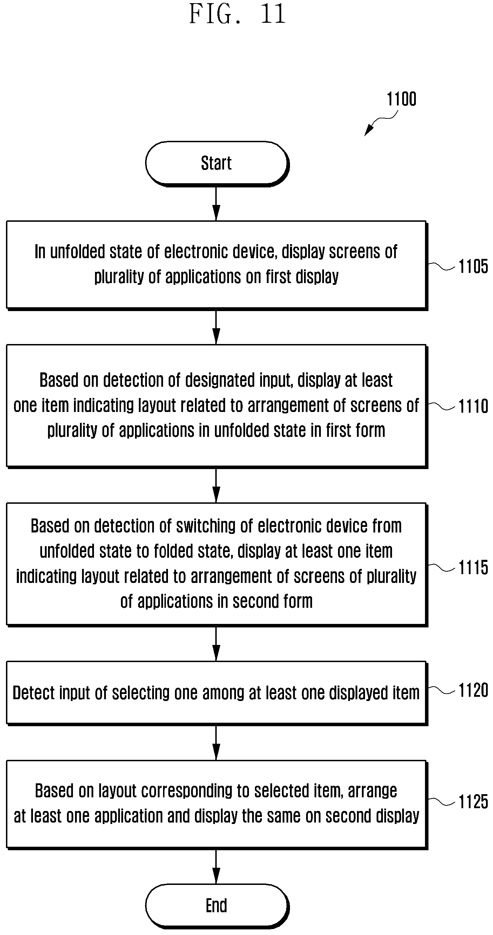

FIG. 11 is a flowchart for explaining a method for displaying at least one item indicating a layout related to the arrangement of screens of a plurality of applications, according to an embodiment of the disclosure.

Referring to FIG. 11, flowchart 1100 illustrates that, in operation 1105, a processor (e.g., the processor 450 of FIG. 4) of an electronic device (e.g., the electronic device 401 of FIG. 4) may display screens of a plurality of applications on a first display (e.g., the first display 441 of FIG. 4) in an unfolded state (e.g., the state of FIG. 2A) of the electronic device 401.

In an embodiment, in operation 1110, based on the detection of a designated input, the processor 450 may display at least one item indicating a layout related to the arrangement of screens of a plurality of applications in an unfolded state in a first form. At least one item of a first form may represent a layout configured to be suitable for the characteristics (e.g., the resolution, size, ratio, number of multiple windows to be supported, and/or form of a layout to be supported of the first display 441) of the first display 441 in an unfolded state of the electronic device 401. For example, at least one item displayed in a first form may include at least one item indicating a layout produced by a user and/or a layout configured based on the characteristics of the first display 441, attribute information related to each application, and/or history information under the control of the processor 450.

In an embodiment, in operation 1115, based on the detection of the switching of the electronic device 401 from an unfolded state to a folded state (e.g., the state of FIG. 2B), the processor 450 may display at least one item indicating a layout related to the arrangement of screens of a plurality of applications in a second form. At least one item of a second form may represent a layout configured to be suitable for the characteristics (e.g., the resolution, size, ratio, number of multiple windows to be supported, and/or form of a layout to be supported of the second display 443) of a second display (e.g., the second display 443 of FIG. 4) in a folded state of the electronic device 401.

In an embodiment, in operation 1120, the processor 450 may detect input of selecting one of at least one displayed item. In operation 1125, based on a layout corresponding to the selected item, the processor 450 may arrange at least one layout and display the same on the second display 443.

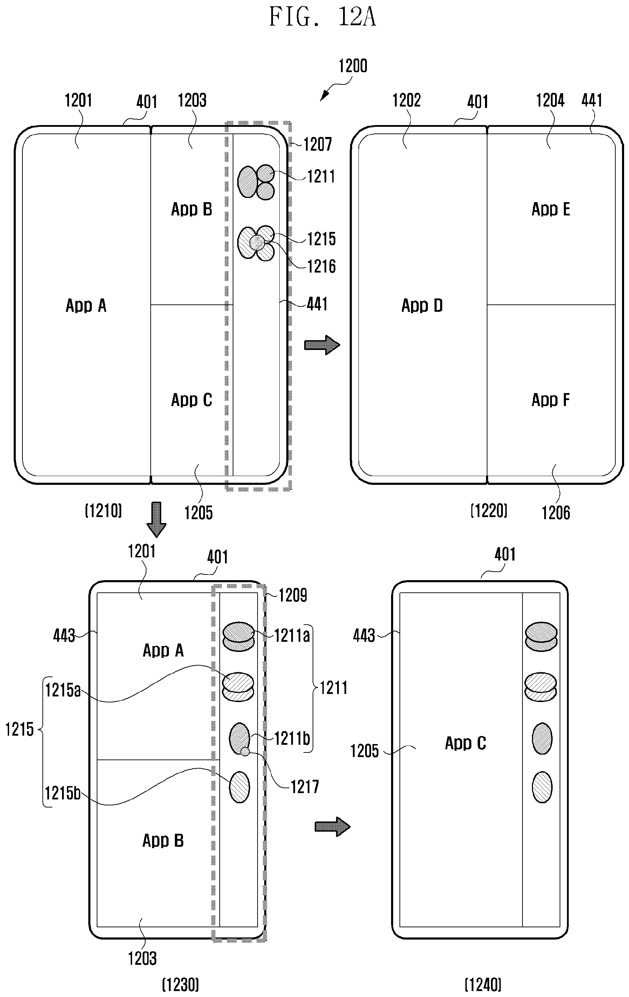

In relation to an embodiment in which at least one item indicating a layout related to the arrangement of screens of a plurality of applications according to the folding state of the electronic device 401 of FIG. 11 according to various embodiments is displayed in a first form or a second form, various embodiments will be described in FIGS. 12A to 12C to be described later.

According to various embodiments, a method for configuring a layout based on the folding state of the electronic device 401 may include displaying screens of a plurality of applications on the first display 441 or the second display 443, based on the detection of the switching of the folding state of the electronic device 401 via the sensor circuit 430, identifying characteristics of the second display 443 or the first display 441 which is activated, attribute information related to each of the plurality of applications, and/or history information, based on the characteristics of the second display 443 or the first display 441 which is activated, attribute information related to each of the plurality of applications, and/or history information, configuring a layout for arranging the screens of the plurality of applications in the switched folding state, and, based on the configured layout, arranging the screens of the plurality of applications and displaying the same on the second display 443 or the first display 441.

A switching of the folding state of an electronic device 401 according to various embodiments may include a switching of the electronic device 401 from an unfolded state (e.g., the state of FIG. 2A) to a folded state (e.g., the state of FIG. 2B), or a switching of the electronic device from a folded state to an unfolded state.

The characteristics of the second display 443 or the first display 441 which is activated according to various embodiments may include the number of multiple windows supported by the second display 443 or the first display according to a resolution, a ratio, and/or a size, and/or a form of a layout.

The attribute information related to each of the plurality of applications according to various embodiments may include category information on each of the plurality of applications, information on the areas in which each of the screens are arranged on the first display 441 or the second display 443, and/or information on whether an input interface has been used.

The history information related to each of the plurality of applications according to various embodiments may include information on the number of times of executions of each of the plurality of applications, information on the execution time of each application, information on the number of times a user input has been detected on each screen, information on whether the application is recently used, and/or information on the priority of each application.

The configuring of the layout according to various embodiments may include, based on the characteristics of the second display 443 or the first display 441 which is activated, attribute information related to each of the plurality of applications, and/or history information, determining the number of areas, the sizes of areas, and/or the arrangement of areas of the second display 443 or the first display 441 to display the screen of each application in the switched folding state, and configuring the layout based on the determined number of areas, sizes of areas, and/or arrangement of areas.

Based on the configured layout according to various embodiments, the arranging of screens of the plurality of application and the displaying of the same on the second display 443 or the first display 441 may include, based on the detection of the switching from the unfolded state (e.g., the state of FIG. 2A) to the folded state (e.g., the state of FIG. 2B) via the sensor circuit 430 while displaying screens of the plurality of applications on the first display 441 in the unfolded state, displaying at least one screen of the plurality of screens on the second display 443, and displaying at least one other screen as an icon in a partial area of the second display 443 or displaying the at least one other screen as a pop-up window on the second display 443.

According to various embodiments, a method of configuring a layout based on the folding state of the electronic device 401 may further include detecting the reception of an event while displaying screens of the plurality of applications on the first display 441 in the unfolded state (e.g., the state of FIG. 2A), based on the detection of input of selecting the received event, configuring a layout in the unfolded state based on characteristics of the first display 441, attribute information related to each of the plurality of applications, and/or history information, and arranging screens of the plurality of applications and the screen of an application corresponding to the event in the configured layout in the unfolded state and displaying the same on the first display 441.

According to various embodiments, a method of configuring a layout based on the folding state of the electronic device 401 may further include detecting the reception of an event while displaying screens of the plurality of applications on the second display 443 in the folded state (e.g., the state of FIG. 2B), based on the detection of the switching from the folded state to the unfolded state (e.g., the state of FIG. 2A) via the sensor circuit 430, configuring a layout in the unfolded state based on characteristics of the first display 441 which is activated, attribute information related to each of the plurality of applications, and/or history information, and arranging screens of the plurality of applications and the screen of an application corresponding to the event in the configured layout in the unfolded state and displaying the same on the first display 441.

According to various embodiments, a method for configuring a layout based on the folding state of the electronic device 401 may further include, based on the detection of a designated input while displaying screens of the plurality of applications on the first display 441 in the unfolded state (e.g., the state of FIG. 2A), displaying at least one item indicating a layout related to the arrangement of the screens of the plurality of applications in the unfolded state (e.g., the state of FIG. 2A) in a first form in a partial area of the first display 441, and, based on the detection of the switching from the unfolded state to the folded state (e.g., the state of FIG. 2B) via the sensor circuit 430, changing the at least one item displayed in the first form to a second form indicating a layout in the folded state and displaying the same in a partial area of the second display 443.

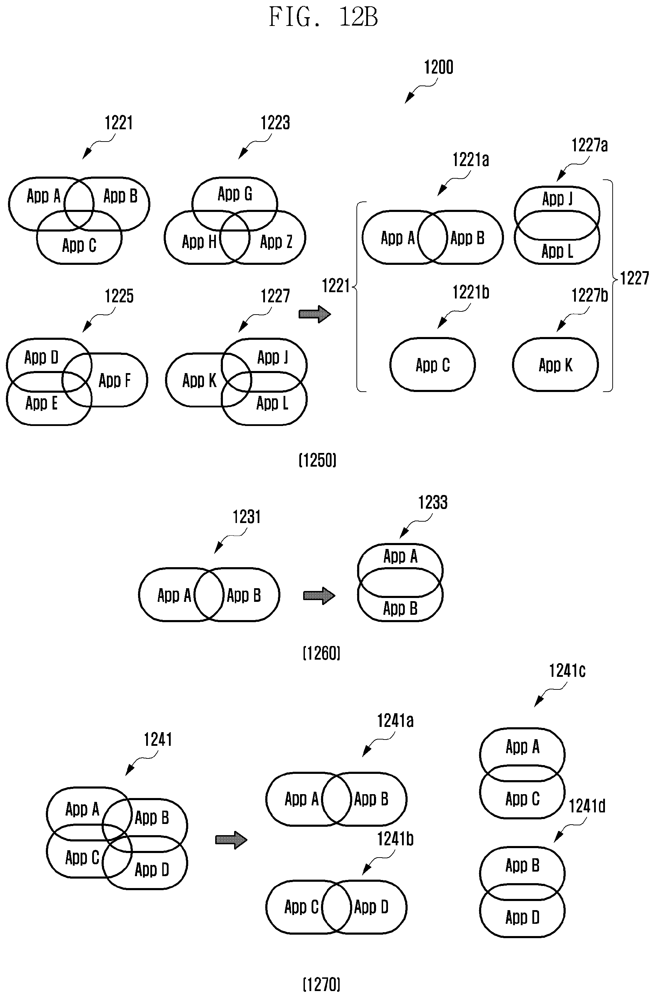

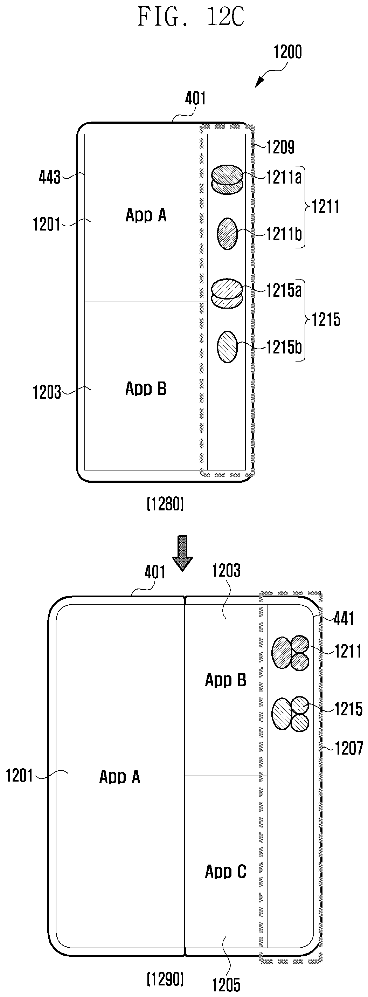

FIGS. 12A, 12B, and 12C are views for explaining a method for displaying at least on item indicating a layout related to the arrangement of screens of a plurality of applications, according to various embodiments of the disclosure.

Referring to FIG. 12A, view 1200 illustrates that, as shown in the figure indicated by reference numeral <1210>, a processor (e.g., the processor 450 of FIG. 4) of an electronic device (e.g., the electronic device 401 of FIG. 4) may display screens of a plurality of applications on a first display (e.g., the first display 441 of FIG. 4) in an unfolded state (e.g., the state of FIG. 2A) of the electronic device 401. For example, the processor 450 may divide the first display 441 into three areas, display a first screen 1201 of application A in a first area of the three areas, display a second screen 1203 of application B in a second area thereof, and display a third screen 1205 of application C in a third area thereof.

In an embodiment, the processor 450 may detect a designated input for displaying at least one item indicating a layout related to the arrangement of screens of a plurality of applications. For example, the designated input may include a swipe input moving from a bezel area of the electronic device 401 to the display region of the first display 441, but the disclosure is not limited thereto.

In an embodiment, based on the detection of the designated input for displaying at least one item indicating a layout related to the arrangement of screens of a plurality of applications, the processor 450 may display a fourth area 1207 of the first display 441. The fourth area 1207 of the first display 441 may display at least one grouped (e.g., in a first form) item indicating a layout related to the arrangement of screens of a plurality of applications, for example, a first item 1211 and a second item 1215. For example, the first item 1211 may include an item indicating a layout related to the arrangement of a first screen 1201 of application A, a second screen 1203 of application B, and a third screen 1205 of application C currently being displayed on the first display 441. A second item 1215 may include an item indicating a layout related to the arrangement of a fourth screen of application D, a fifth screen of application E, and a sixth screen of application F.

In an embodiment, at least one item may include an item indicating a layout produced by a user and/or a layout configured, under the control of the processor 450, based on characteristics of the first display 441, attribute information related to each application, and/or history information.

In an embodiment, based on the detection of input of selecting one of at least one item included in the fourth area 1207, the processor 450 may arrange screens of a plurality of applications based on a layout corresponding to the selected item to display same. For example, the processor 450 may detect an input 1216 of selecting a second item 1215 among a first item 1211 and a second item 1215. Based on the detection of the input 1216 of selecting the second item 1215, as shown in the figure indicated by reference numeral <1220>, the processor 450 may arrange the screens of a plurality of application in a layout corresponding to the selected second item 1215 to display same. For example, based on a layout corresponding to the selected second item 1215, for example, a layout divided into three areas, the processor 450 may display a fourth screen 1202 of application D in a first area, display a fifth screen 1204 of application E in a second area, and display a sixth screen 1206 of application F in a third area.

In an embodiment, as shown in the figure indicated by reference numeral <1230>, the processor 450 may detect the switching of the electronic device 401 from an unfolded state (e.g., the state of FIG. 2A) to a folded state (e.g., the state of FIG. 2B) via a sensor circuit (e.g., the sensor circuit 430 of FIG. 4).

In an embodiment, the processor 450 may configure a layout based on characteristics of the second display 443 which is activated according to the switching to a folded state, attribute information of each of application A, application B, and application C, and/or history information. For example, the processor 450 may divide the second display 443 into two areas, for example, divide the same up and down (e.g., divide horizontally), based on the number (e.g., two) of multiple windows supported by a second display (e.g., the second display 443 of FIG. 4). For example, the processor 450 may control the second display 443 to display a first screen 1201 of application A in a first area of the two divided areas and to display a second screen 1203 of application B in a second area thereof.

In an embodiment, the processor 450 may display a first screen 1201 of application A in a first area of the second display 443, display a second screen 1203 of application B in a second area, and divide (e.g., in a second form) at least one grouped item in a third area 1209 of the second display 443 and display the divided items (e.g., divide the first item 1211 into a (1-1)-th item 1211a and a (1-2)-th item 1211b and display the divided items, or divide the second item 1215 into a (2-1)-th item 1215a and a (2-2)-th item 1215b and display the divided items).

In an embodiment, a layout displayed on the second display 443 may be a layout for the (1-1)-th item 1211a. Based on the detection of an input of selecting one of at least one grouped item, for example, an input 1217 of selecting the (1-2)-th item 1211b, as shown in the figure indicated by reference numeral <1240>, the processor 450 may display the third screen 1205 of application C on the second display 443.

In various embodiments, the disclosure is not limited to the first item 1211 and the second item 1215 indicating a layout related to arrangement of screens of a plurality of applications. For example, the processor 450 may display at least one item indicating a layout where screens of a plurality of applications are arranged in various forms. In relation to this, various embodiments will be described in FIG. 12B to be described later.

Referring to FIG. 12B, view 1200 illustrates that, when the first display 441 is divided into three areas, based on the detection of a designated input for displaying at least one item indicating a layout related to the arrangement of screens of a plurality of applications in an unfolded state (e.g., the state of FIG. 2A) of the electronic device 401, as shown in the figure indicated by reference numeral <1250>, the processor 450 may display a third item 1221 grouped (e.g., in a first form) in a fourth area 1207 (e.g., an item indicating a layout configured for a screen of application A, a screen of application B, and a screen of application C), a fourth item 1223 (e.g., an item indicating a layout configured for a screen of application G, a screen of application H, and a screen of application Z), a fifth item 1225 (e.g., an item indicating a layout configured for a screen of application D, a screen of application E, and a screen of application F), a sixth item 1227 (e.g., an item indicating a layout configured for a screen of application J, a screen of application K, and a screen of application L).

In an embodiment, based on the detection of the switching of the electronic device 401 from an unfolded state (e.g., the state of FIG. 2A) to a folded state (e.g., the state of FIG. 2B) via the sensor circuit 430, the processor 450 may divide (e.g., in a second form) at least one grouped item in the third area 1209 of the second display 443 and display the divided items (e.g., divide a third item 1221 into a (3-1)-th item 1221a and a (3-2)-th item 1221b and display the divided items, or divide the sixth item 1227 into a (6-1)-th item 1227a and a (6-2)-th item 1227b) and display the divided items.

In various embodiments, in a layout in which the first display 441 is divided into two areas, based on the detection of a designated input for displaying at least one item indicating a layout related to the arrangement of screens of a plurality of applications in an unfolded state (e.g., the state of FIG. 2A) of the electronic device 401, as shown in the figure indicated by reference numeral <1260>, the processor 450 may display a seventh item 1231 (e.g., an item indicating a layout configured for a screen of application A and a screen of application B) in the fourth area 1207 of the first display 441.

In an embodiment, based on the detection of the switching of the electronic device 401 from an unfolded state (e.g., the state of FIG. 2A) to a folded state (e.g., the state of FIG. 2B) via the sensor circuit 430, the processor 450 may display a seventh item 1233 in a third area 1209 of the second display 443.

In various embodiments, in a layout in which the first display 441 is divided into four areas, as shown in the figure indicated by reference numeral <1270>, based on the detection of a designated input for displaying at least one item indicating a layout related to the arrangement of screens of a plurality of applications in an unfolded state (e.g., the state of FIG. 2A) of the electronic device 401, the processor 450 may display a grouped (e.g., in a first form) eighth item 1241 (e.g., an item indicating a layout configured for a screen of application A, a screen of application B, a screen of application C, and a screen of application D) in a fourth area 1207 of the first display 441.

In an embodiment, based on the detection of the switching of the electronic device 401 from an unfolded state (e.g., the state of FIG. 2A) to a folded state (e.g., the state of FIG. 2B) via the sensor circuit 430, the processor 450 may divide (e.g., in a second form) at least one grouped item and display the divided items (e.g., divide an eighth item 1241 into a (8-1)-th item 1241a and a (8-2)-th item 1241b and display the divided items, or divide the eighth item 1241 into a (8-3)-th item 1241c and a (8-4)-th item 1241d) in a third area 1209 of the second display 443 and display the divided items.

Referring to FIG. 12C, view 1200 illustrates that the processor 450 may display screens of a plurality of applications on the second display 443 in a folded state (e.g., the state of FIG. 2B) of the electronic device 401. For example, as shown in the figure indicated by reference numeral <1280>, the processor 450 may divide the second display 443 into two areas, display a first screen 1201 of application A in a first area of the two areas, and display a second screen 1203 of application B in a second area thereof.

In an embodiment, the processor 450 may detect a designated input (e.g., swipe input of moving from a bezel area of the electronic device 401 to the display region of the second display 443) for displaying at least one item indicating a layout related to the arrangement of screens of a plurality of applications. Based on the detection of a designated input for displaying at least one item indicating a layout related to the arrangement of screens of a plurality of applications, the processor 450 may display the third area 1209 of the second display 443 as shown in the figure indicated by reference numeral <1290>. The processor 450 may divide (e.g., in a second form) at least one item indicating a layout related to the arrangement of screens of a plurality of applications in the third area 1209 of the second display 443, and display the divided items (e.g., divide a first item 1211 into a (1-1)-th item 1211a and a (1-2)-th item 1211b and display the divided items, or divide a second item 1215 into a (2-1)-th item 1215a and a (2-2)-th item 1215b and display the divided items). For example, the layout displayed on the second display 443 may be a layout for the (1-1)-th item 1211a.

In an embodiment, the processor 450 may detect the switching of the electronic device 401 from a folded state (e.g., the state of FIG. 2B) to an unfolded state (e.g., the state of FIG. 2A) via the sensor circuit 430.

In an embodiment, the processor 450 may group (e.g., in a first form) one or more divided items (e.g., a first item 1211 and a second item 1215) and display the grouped items in the fourth area 1207 of the first display 441.

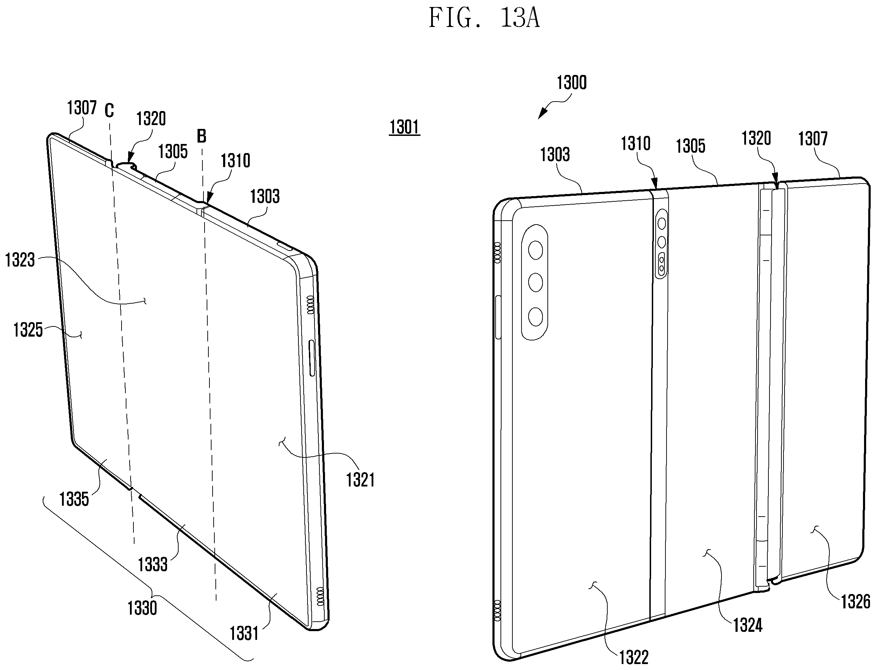

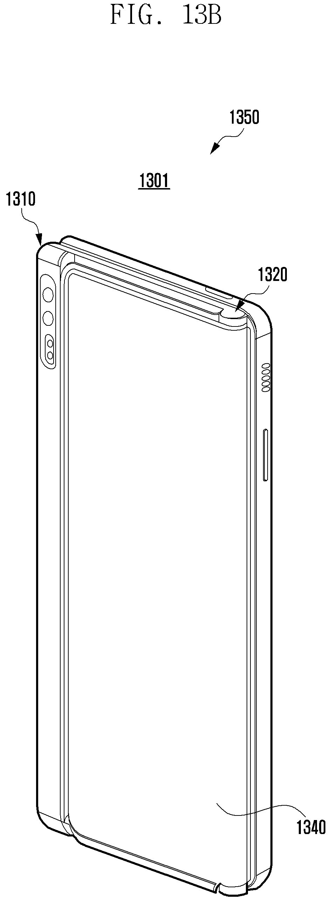

FIG. 13A is a view illustrating an unfolded state of an electronic device, according to an embodiment of the disclosure. FIG. 13B is a view illustrating a folded state of the electronic device of FIG. 13A, according to an embodiment of the disclosure.

In the above-described FIGS. 2A, 2B, 3, 4, 5, 6, 7A, 7B, 8, 9A, 9B, 10A, 10B, 11, and 12A to 12C according to various embodiments, descriptions have been made that a second display (e.g., the second display 443 in FIG. 4) is disposed on a fourth surface (e.g., the fourth surface 222 in FIG. 2A) of the second housing 220, but the disclosure is not limited thereto.

Referring to FIGS. 13A and 13B, views 1300 and 1350 illustrate that an electronic device 1301 may include a first housing 1303, a second housing 1305, a third housing 1307, and a display 1330. The electronic device 1301 may include at least a part of the structures and/or functions of the electronic device 101 of FIG. 1, the electronic device 200 of FIGS. 2A and 2B, and/or the electronic device 401 of FIG. 4.

In an embodiment, the first housing 1303 and the second housing 1305 may be arranged at opposite sides around a folding axis (e.g., axis B), and may have a symmetrical form with respect to a folding axis (e.g., axis B). The second housing 1305 and the third housing 1307 may be arranged at opposite sides around a folding axis (e.g., axis C), and may have a symmetrical form with respect to a folding axis (e.g., axis C). The first housing 1303 and the second housing 1305, the second housing 1305 and the third housing 1307 may be designed to be folded with respect to each other. The first housing 1303, the second housing 1305, and the third housing 1307 may be folded and overlapped via at least one hinge device (e.g., a first hinge device 1310 and a second hinge device 1320) with reference to folding axes B and C. For example, the first housing 1303 and the second housing 1305 may be operated in an in-folding manner in which the first housing and the second housing are rotated with respect to each other with reference to the axis B. The second housing 1305 and the third housing 1307 may be operated in an out-folding manner in which the second housing and the third housing are rotated with respect to each other with reference to the axis C.

In an embodiment, the first housing 1303 may include a first surface 1321 and a second surface 1322 facing a direction opposite to the first surface 1321, the second housing 1305 may include a third surface 1323 and a fourth surface 1324 facing a direction opposite to the third surface 1323, and the third housing 1307 may include a fifth surface 1325 and a sixth surface 1326 facing a direction opposite to the fifth surface 1325. For example, when the display 1330 of the electronic device 1301 is folded with reference to the axis B, the first surface 1321 of the first housing 1303 and the third surface 1323 of the second housing 1305 may face each other. When the display 1330 is folded with reference to the axis C, the fourth surface 1324 of the second housing 1305 and the sixth surface 1326 of the third housing 1307 may face each other.

According to various embodiments, an unfolded state of the electronic device 1301 is a state in which the first housing 1303, the second housing 1305, and the third housing 1307 are arranged side by side, and may include a state in which the electronic device 1301 is completely unfolded.

According to various embodiments, a folded state of the electronic device 1301 may include a state in which the electronic device 1301 is completely folded with reference to the axis B and the axis C, a state in which the electronic device is folded with reference to the axis B and not folded with reference to the axis C, or a state in which the electronic device is not folded with reference to the axis B and is folded with reference to the axis C.

In an embodiment, the display 1330, which is a display region in which a screen of an application is displayed, for example, may be divided into a first display region 1331, a second display region 1333, and a third display region 1335. The first display region 1331 may be disposed on the first surface 1321 of the first housing 1303, the second display region 1333 may be disposed on the third surface 1323 of the second housing 1305, and the third display region 1335 may be disposed on the fifth surface 1325 of the third housing 1307.

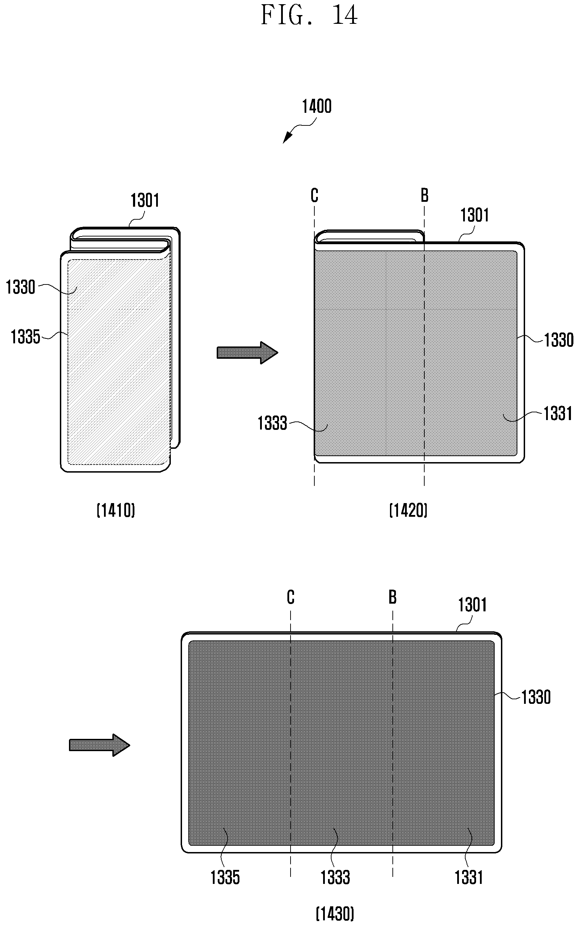

FIG. 14 is a view for explaining a method for configuring a layout, based on a switching of a folding state of an electronic device, according to an embodiment of the disclosure.

Referring to FIG. 14, view 1400 illustrates that an electronic device (e.g., the electronic device 1301 of FIG. 13A) may be switched a folded state or an unfolded state with reference to two or more folding axes (e.g., axis B and axis C). Based on a folded state or an unfolded state of the electronic device 1301, a third display region (e.g., the third display region 1335 of FIG. 13A) of a display (e.g., the display 1330 of FIG. 13A) may be activated (e.g., see the part indicated by reference numeral <1410>), a first display region (e.g., the first display region 1331 of FIG. 13A) and a second display region (e.g., the second display region 1333 of FIG. 13A) may be activated (e.g., see the part indicated by reference numeral <1420>), or the first display region 1331, the second display region 1333, and the third display region 1335 may be activated (e.g., see the part indicated by reference numeral <1430>).

In an embodiment, based on the first display region 1331, the second display region 1333, and/or the third display region 1335 of the display 1330 which is activated based on a folded state or an unfolded state, the electronic device 1301 may configure a layout for arranging screens of a plurality of application to be displayed. For example, based on characteristics of the first display region 1331, the second display region 1333, and/or the third display region 1335 of the display 1330 which is activated, attribute information of each of a plurality of applications, and/or history information, the electronic device 1301 may configure (e.g., configure the number of areas for displaying the screen of each application, the sizes of areas, and/or the arrangement of areas) a layout to be displayed in the first display region 1331, the second display region 1333, and/or the third display region 1335.

Based on the characteristics of the first display region 1331, the second display region 1333, and/or the third display region 1335 of the display 1330 which is activated, attribute information of each of a plurality of applications, and/or history information according to various embodiments, a method of configuring a layout to be displayed in the first display region 1331, the second display region 1333, and/or the third display region 1335 is similar to that in the embodiments of FIGS. 5, 6, 7A, 7B, 8, 9A, 9B, 10A, and 10B described above, and thus a detailed description thereof may be substituted for the description related to FIGS. 5, 6, 7A, 7B, 8, 9A, 9B, 10A, and 10B.

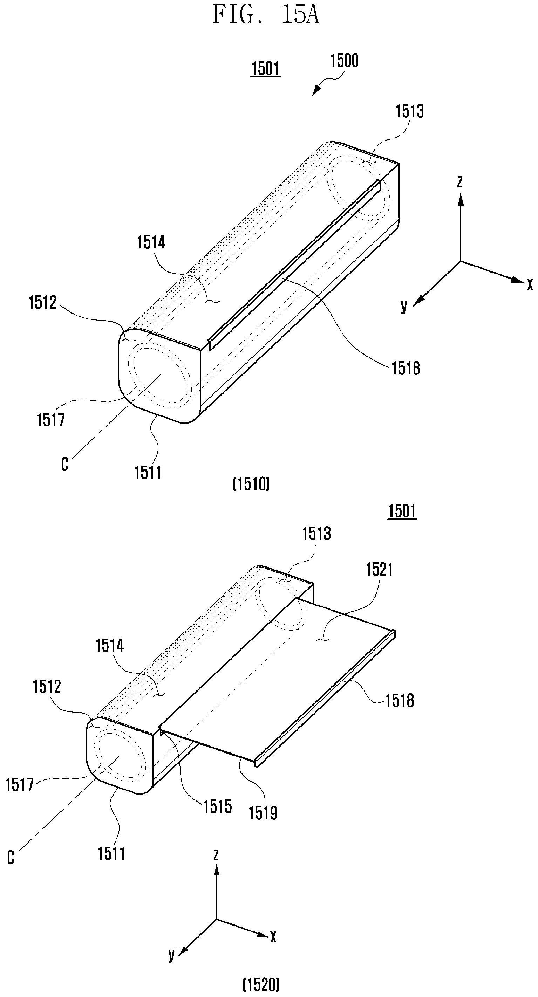

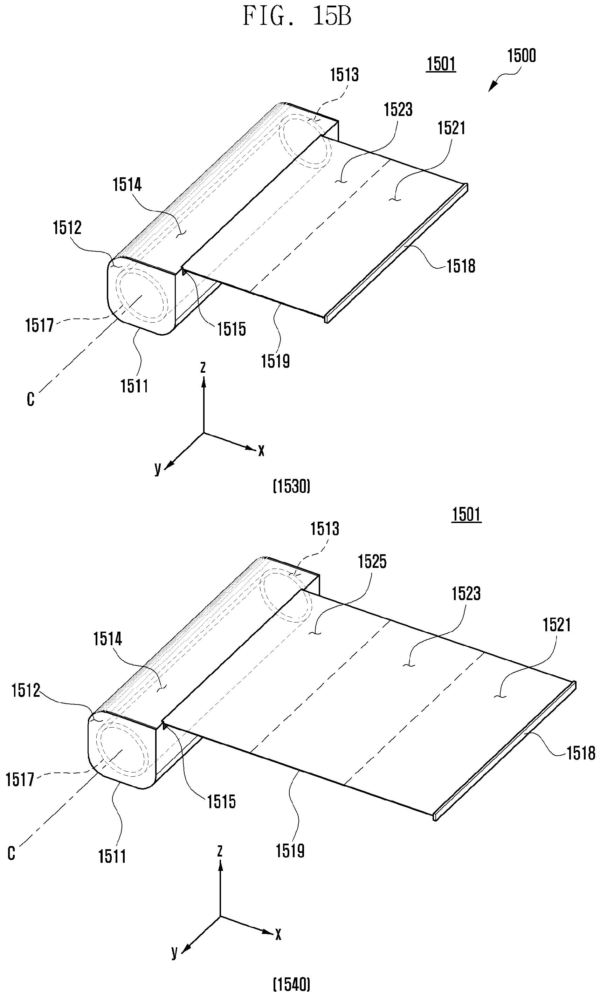

FIGS. 15A and 15B are views for explaining a method for configuring a layout, based on a switching of a state of an electronic device, according to various embodiments of the disclosure.

FIGS. 15A and 15B according to various embodiments illustrate form factors including a flexible display with respect to an electronic device. The flexible display, for example, may be referred to as a rollable display.

Referring to FIGS. 15A and 15B, views 1500 illustrate that an electronic device 1501 may include a housing (or, a housing structure) 1511, a flexible display 1519, and/or a cylindrical roller 1517.

In an embodiment, at least a part of the flexible display 1519 may be accommodated in an inner space of the housing 1511 in a circular form in a rolled state. While a first member 1518 moves from the housing 1511, the flexible display 1519 may expand while being guided by the cylindrical roller 1517 disposed in the housing 1511. For example, as the first member 1518 moves from the housing 1511, the display region of the flexible display 1519 exposed to the outside may increase.

In an embodiment, at least a part of the flexible display 1519, for example, may be introduced into the inner space of the housing 1511 while being circularly rolled around a rotation axis C1. In an embodiment, the housing 1511 may include a first surface 1512 and a second surface 1513 positioned to be spaced apart from each other in the direction in which the rotation axis C1 extends (e.g., the y-axis direction). The first surface 1512 may be directed to a first direction (e.g., the y-axis direction), and the second surface 1513 may be directed to a second direction (e.g., the -y-axis direction) opposite to the first direction. The housing 1511 may include a third surface 1514 (e.g., a lateral surface or a side surface) surrounding a space between the first surface 1512 and the second surface 1513. The housing 1511 may include an opening 1515 positioned on the third surface 1514, and the flexible display 1519 may be introduced into the inner space of the housing 1511 or be withdrawn to the outside of the housing 1511 through the opening 1515. In an embodiment, the housing 1511 may refer to a structure of forming at least a part of the third surface 1514, the first surface 1512, and the second surface 1513.

In an embodiment, a cylindrical roller 1517 may be rotatably positioned inside the housing 1511 about the rotation axis C1. In the state change (e.g., a switching between a closed state and an open state) of the electronic device 1501, a switching between movement of the flexible display 1519 and rotational movement of the cylindrical roller 1517 may occur. For example, when the electronic device 1501 is switched from an open state to a closed state, at least a part of the flexible display 1519 may be introduced into the inner space of the housing 1511 while being rolled on the cylindrical outer surface of the cylindrical roller 1517 rotating about the rotation axis C1.

In an embodiment, a closed state of the electronic device 1501 illustrated in the figure indicated by reference numeral <1510> of FIG. 15A, which is, for example, a state where the flexible display 1519 is moved to the maximum where the flexible display is no longer introduced into the inner space of the housing 1511, may be referred to as a state in which a screen (e.g., a display area or an active area) shown to the outside is reduced. In an embodiment, in a closed state of the electronic device 1501, a screen shown to the outside may not be substantially formed.

In an embodiment, an open state of the electronic device 1501 illustrated in the figure indicated by reference numeral <1540> of FIG. 15B, which is, for example, a state where the flexible display 1519 is moved to the maximum where the flexible display is no longer withdrawn to the outside of the housing 1511, may be referred to as a state in which a first display region 1521, a second display region 1523, and a third display region 1525 of the flexible display 1519 expand. For example, the open state may represent a state where, as the first member 1518 moves with respect to the housing 1511 from the state where the entire display region of the flexible display 1519 (e.g., the first display region 1521, the second display region 1523, and the third display region 1525) is accommodated (or inserted) in the housing 1511, the first display region 1521, the second display region 1523, and the third display region 1525 of the flexible display 1519 are exposed to the outside.

In an embodiment, an intermediate state of the electronic device 1501 illustrated in the figures indicated by reference numeral <1520> of FIG. 15A and reference numeral <1530> of FIG. 15B, which is, for example, a state between the closed state of the figure indicated by reference numeral <1510> and the open state of the figure indicated by reference numeral <1540>, may be referred to as a state in which the first display region 1521 and/or the second display region 1523 of the flexible display 1519 expand. For example, the intermediate state may represent a state where, as the first member 1518 moves with respect to the housing 1511 from the state where the entire display region of the flexible display 1519 (e.g., the first display region 1521, the second display region 1523, and the third display region 1525) is accommodated (or inserted) in the housing 1511, the first display region 1521 and/or the second display region 1523 of the flexible display 1519 are/is exposed to the outside.

In an embodiment, based on the first display region 1521, the second display region 1523, and/or the third display region 1525 of the flexible display 1519 which is activated based on an intermediate state (e.g., the state of the figures indicated by reference numerals <1520> and <1530>) or an open state (e.g., the state of the figure indicated by reference numeral <1540>), the electronic device 1501 may configure a layout for arranging screens of a plurality of applications to be displayed. For example, based on the characteristics (e.g., the resolution, the ratio (e.g., the ratio of the horizontal length to the vertical length of an area), the number of multiple windows supported by the size, and/or the form of a layout to be supported (e.g., a horizontally and/or vertically divided layout)) of the first display region 1521, the second display region 1523, and/or the third display region 1525 of the flexible display 1519 which is activated, attribute information of each of a plurality of applications, and/or history information, the electronic device 1501 may configure (e.g., configure the number of areas for displaying the screen of each application, the sizes of areas, and/or the arrangement of areas) a layout to be displayed in the first display region 1521, the second display region 1523, and/or the third display region 1525.

Referring to FIGS. 15A and 15B, descriptions have been made using the division of the first display region 1521, the second display region 1523, and/or the third display region 1525, but this is for the convenience of explanation and the disclosure is not limited thereto. For example, as the first member 1518 moves from the housing 1511, the entire display region of the flexible display 1519 exposed to the outside may be increased or decreased. A layout to be displayed on the flexible display 1519 may be configured based on characteristics (e.g., the ratio of the area of at least a partial display region which is activated to the area of the total display region (e.g., the ratio of the horizontal length to the vertical length of the region), the number of multiple windows supported according to the area, and/or the form of a layout to be supported (e.g., a horizontally and/or vertically divided layout)) of the display region changed as the first member 1518 moves from the housing 1511, attribute information of each of a plurality of applications, and/or history information.

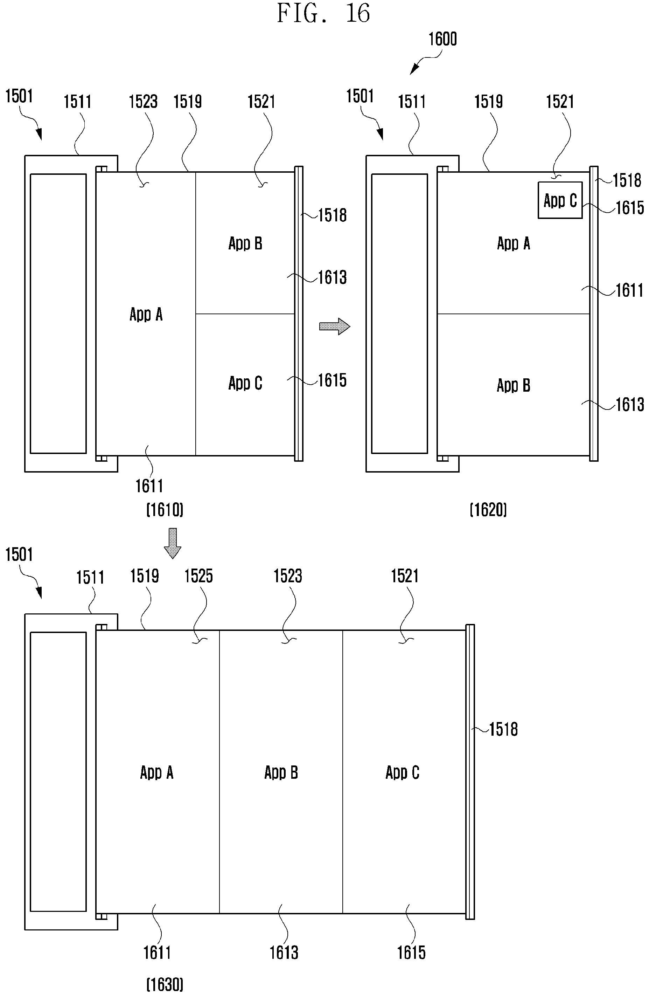

FIG. 16 is a view for explaining a method for configuring a layout, based on a switching of a state of an electronic device, according to an embodiment of the disclosure.

Referring to FIG. 16, view 1600 illustrates that, as shown in the figure indicated by reference numeral <1610>, based on the fact that at least a part of the flexible display 1519 is withdrawn from the inner space of the housing 1511, the electronic device 1501 may be in a state in which at least a part of display regions of the flexible display 1519, for example, the first display region 1521 and the second display region 1523 are exposed to the outside (e.g., a state indicated by reference numeral <1530> in FIG. 15B). For example, screens of a plurality of application may be displayed in a state in which the first display region 1521 and the second display region 1523 are exposed to the outside.

In an embodiment, by executing a plurality of applications, for example, three applications, three screens corresponding thereto may be displayed on the first display region 1521 and the second display region 1523. For example, the electronic device 1501 may display a first screen 1611 of application A in the second display region 1523, display a second screen 1613 of application B in a first area of two divided areas of the first display region 1521, and display a third screen 1615 of application C in a second area thereof.

The figure indicated by reference numeral <1610> according to various embodiments is one embodiment, and the disclosure is not limited embodiments. For example, the screen of an application disposed in each area may be different according to attribute information of each application.

In an embodiment, as shown in the figure indicated by reference numeral <1620>, in the electronic device 1501, by the state switching of the electronic device 1501, for example, the movement of the first member 1518, at least a part of regions (e.g., the second display region 1523 of FIGS. 15A and 15B) of the flexible display 1519 may be introduced into the inner space of the housing 1511. As at least a part of regions of the flexible display 1519, for example, the second display region 1523 is introduced into the inner space of the housing 1511, the second display region 1523 may be deactivated. For example, as the second display region 1523 of the flexible display 1519 is introduced into the inner space of the housing 1511, the electronic device may be in a state (e.g., the state of the figure indicated by reference numeral <1520> of FIG. 15A) where only the first display region 1521 of the flexible display 1519 is exposed to the outside.

In an embodiment, based on the introduction of the second display region 1523 of the electronic device 1501 into the inner space of the housing 1511, in order to configure a layout for displaying, on the first display region 1521 being activated, a first screen 1611 of application A, a second screen 1613 of application B, and a third screen 1615 of application C having been displayed in the first display region 1521 and the second display region 1523, the electronic device 1501 may identify the characteristics (e.g., the ratio of the first display region 1521, the number of windows supported according to the size of the first display region 1521, and/or the type of a layout to be supported (e.g., a horizontally and/or vertically divided layout)) of the first display region 1521, attribute information (e.g., category information of each application, information on the region where the screen of each application is arranged, and/or information on whether the input interface of each application has been used) of each of application A, application B, and application C, and/or history information (e.g., information on the number of times of executions of each application, information on the execution time of each application, information on the number of times a user input has been detected on each screen, information on whether the application has been recently used, and/or information on the priority of each application). The configuring of a layout may include the number of areas for displaying the first screen 1611 of application A, the second screen 1613 of application B, and the third screen 1615 of application C in the first display region 1521, the sizes of areas, and/or positions of areas to be arranged.

In an embodiment, based on the characteristics of the first display region 1521, attribute information of each application, and/or history information, the electronic device 1501 may configure a layout of the first display region 1521 of the flexible display 1519. For example, as shown in the figure indicated by reference numeral <1620>, the electronic device 1501 may display two screens, for example, a first screen 1611 of application A and a second screen 1613 of application B in two areas of the vertically divided first display region 1521 in a multi-window form, and may display the other screen, for example, a third screen 1615 of application C in a different form (e.g., a pop-up window, an icon, or an overlapping display).

In an embodiment, in the state of the figure indicated by reference numeral <1610> of the electronic device 1501 (e.g., the state in which the first display region 1521 and the second display region 1523 of the flexible display 1519 are withdrawn from the inner space of the housing 1511), by the movement of the first member 1518, as shown in the figure indicated by reference numeral <1630>, at least a part of different region of the flexible display 1519, for example, the third display region 1525 may be withdrawn from the inner space of the housing 1511. As the third display region 1525 is withdrawn, the first display region 1521, the second display region 1523, and the third display region 1525 of the flexible display 1519 may be activated (e.g., the state of the figure indicated by reference numeral <1540> of FIG. 15B).

In an embodiment, based on the fact that the third display region 1525 of the flexible display 1519 is withdrawn to the outside, in order to configure a layout for displaying, in the first display region 1521, second display region 1523, and third display region 1525 which is activated, the screens of a plurality of applications (e.g., a first screen 1611 of application A, a second screen 1613 of application B, and a third screen 1615 of application C) having been displayed in the first display region 1521 and the second display region 1523, the electronic device 1501 may identify the characteristics of the display regions 1521, 1523, and 1525 which are activated, attribute information of each application, and/or history information.

In an embodiment, based on characteristics of display regions 1521, 1523, and 1525 (e.g., the ratio of sizes including a first display region 1521, a second display region 1523, and a third display region 1525, the number of windows supported by the sizes, and/or the type of a layout to be supported (e.g., a horizontally and/or vertically divided layout)), attribute information of each application, and/or history information, the electronic device 1501 may configure a layout of the first display region 1521, the second display region 1523, and the third display region 1525 of the flexible display 1519. For example, as shown in the figure indicated by reference numeral <1630>, the electronic device 1501 may display the screen of each of a plurality of applications in each display region. For example, the electronic device may display the first screen 1611 of application A in the third display region 1525, display the second screen 1613 of application B in the second display region 1523, and display the third screen 1615 of application C in the first display region 1521.

Referring to FIG. 16, descriptions have been made that a layout for displaying screens of a plurality of applications on the flexible display 1519 is configured in a state (e.g., the state of the figure indicated by reference numeral <1610>) in which the first display region 1521 and the second display region 1523 of the flexible display 1519 are exposed to the outside of the housing 1511, when the state is switched, for example, the state where only the first display region 1521 is exposed to the outside (e.g., the state of the figure indicated by reference numeral <1620>) (or, when the first display region 1521, the second display region 1523, and the third display region 1525 are exposed to the outside (e.g., the state of the figure indicated by reference numeral <1630>)), but the disclosure is not limited thereto.

In an embodiment, in a state where the first display region 1521 of the flexible display 1519 is exposed to the outside of the housing 1511 (e.g., the state of the figure indicated by reference numeral <1620>), when the state is switched, for example, a case where the second display region 1523 and/or the third display region 1525 are/is exposed to the outside (e.g., the state of the figure indicated by reference numeral <1610> and/or the state of the figure indicated by reference numeral <1630>) (or, a case of the switching from a state (e.g., the state of the figure indicated by reference numeral <1630>) where the first display region 1521, the second display region 1523, and the third display region 1525 are exposed to the outside to a state (e.g., the state of the figure indicated by reference numeral <1610> or reference numeral <1620>) where only the first display region 1521 and/or the second display region 1523 are/is exposed to the outside), based on the characteristics of display regions, attribute information of each of a plurality of applications, and/or history information, a layout for arranging screens of a plurality of applications on the flexible display 1519 may be configured as shown in the figures indicated by reference numeral <1610> and/or reference numeral <1630> (or reference numeral <1610> and/or reference numeral <1620>) described above.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it denotes that the element may be coupled with the other element directly (e.g., through wires), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. The term "non-transitory" simply denotes that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been shown and described with reference to various embodiments thereof, it will be understood by those skilled in the art that various changes in form and details may be made therein without departing from the and scope of the disclosure as defined by the appended claims.

In addition to the foregoing explanations, the following enumerated aspects 1 to 15 are also relevant for the present disclosure as part of the specification which must not be confused with the appended claims (that follow after the description):
Aspect 1: an electronic device comprising: a hinge module; a first housing connected to the hinge module and including a first surface, a second surface facing a direction opposite to the first surface, and a first lateral surface surrounding a first space between the first surface and the second surface; a second housing connected to the hinge module to be foldable with respect to the first housing and, in an unfolded state, including a third surface facing the same direction as the first surface, a fourth surface facing a direction opposite to the third surface, and a second lateral surface surrounding a second space between the third surface and the fourth surface; a first display disposed from at least a part of the first surface to at least a part of the third surface; a second display disposed on at least a part of the fourth surface; a sensor circuit; and a processor operatively connected to the first display, the second display, and the sensor circuit, wherein the processor is configured to: display screens of a plurality of applications on the first display or the second display; based on the detection of the switching of the folding state of the electronic device via the sensor circuit, identify characteristics of the second display or the first display which is activated, attribute information related to each of the plurality of applications, and/or history information related to each of the plurality of applications; based on at least one of the characteristics of the second display or the first display which is activated, the attribute information related to the each of the plurality of applications, or the history information, configure a layout to arrange the screens of the plurality of applications in the switched folding state; and based on the configured layout, arrange the screens of the plurality of applications and display the screens of the plurality of applications arranged based on the layout on the second display or the first display.
Aspect 2: The electronic device of aspect 1, wherein the switching of a folding state of the electronic device comprises a switching of the electronic device from the unfolded state to a folded state, or a switching of the electronic device from the folded state to the unfolded state.
Aspect 3: The electronic device of aspect 1, wherein the characteristics of the second display or the first display which has been activated comprise at least one of the number of multiple windows or a form of a layout supported by the second display or the first display according to at least one of a resolution, a ratio, or a size of the second display and/or the first display, wherein the attribute information related to the each of the plurality of applications comprises category information of the each of the plurality of applications, information on an area in which the screen of the each application is arranged on the first display or the second display, and/or information on whether an input interface has been used, and wherein the history information related to the each of the plurality of applications comprises at least one of information on the number of times of executions of the each of the plurality of applications, information on the execution time of the each application, information on the number of times a user input has been detected on each screen, information on whether the application has been recently used, or information on the priority of the each application.
Aspect 4: The electronic device of aspect 1, wherein the processor is further configured to: based on at least one of the characteristics of the second display or the first display which is activated, the attribute information related to each of the plurality of applications, or the history information, determine at least one of the number of areas, sizes of areas, or arrangement of areas of the second display or the first display for displaying the screen of each application in the switched folding state; and configure the layout based on at least one of the determined number of areas, the sizes of the areas, or the arrangement of the areas.
Aspect 5: The electronic device of aspect 2, wherein the processor is further configured to: based on the detection of the switching from the unfolded state to the folded state via the sensor circuit while displaying the screens of the plurality of applications on the first display in the unfolded state, display at least one screen among the plurality of screens on the second display; and display at least one other screen as an icon in a partial area of the second display or display the at least one other screen as a pop-up window on the second display.
Aspect 6: The electronic device of aspect 2, wherein the processor is further configured to: detect the reception of an event while displaying the screens of the plurality of applications on the first display in the unfolded state; based on the detection of input of selecting the received event, configure a layout in the unfolded state based on the characteristics of the first display, attribute information related to each of the plurality of applications, and/or history information; and arrange the screens of the plurality of applications and the screen of an application corresponding to the event in the configured layout in the unfolded state and display the same on the first display.
Aspect 7: The electronic device of aspect 2, wherein the processor is further configured to: detect the reception of an event while displaying screens of the plurality of applications on the second display in the folded state; based on the detection of the switching from the folded state to the unfolded state via the sensor circuit, configure a layout in the unfolded state based on the characteristics of the first display which is activated, attribute information related to each of the plurality of applications, and/or history information; and arrange the screens of the plurality of applications and the screen of an application corresponding to the event in the configured layout in the unfolded state and display the same on the first display.
Aspect 8: The electronic device of aspect 2, wherein the processor is further configured to: based on the detection of a designated input while displaying screens of the plurality of application on the first display in the unfolded state, display, in a partial area of the first display, at least one item indicating a layout related to the arrangement of the screens of the plurality of applications in the unfolded state as a first form; and based on the detection of the switching from the unfolded state to the folded state via the sensor circuit, change the at least one item displayed in the first form to a second form indicating a layout in the folded state and display the same in a partial area of the second display, and wherein at least one item displayed in the first form comprises at least one item indicating a layout produced by a user and/or at least one item indicating a layout configured based on the characteristics of the second display or the first display which is activated, attribute information related to each application, and/or history information.
Aspect 9: A method for configuring a layout based on the folding state of an electronic device, the method comprising: displaying screens of a plurality of applications on a first display or a second display; based on detection of switching of the folding state of the electronic device via a sensor circuit, identifying characteristics of the second display or the first display which is activated, attribute information related to each of the plurality of applications, and/or history information; based on at least one of the characteristics of the second display or the first display which is activated, attribute information related to each of the plurality of applications, or history information, configuring a layout for arranging the screens of the plurality of applications in the switched folding state; and based on the configured layout, arranging the screens of the plurality of applications and displaying the screens of the plurality of applications arranged based on the layout on the second display or the first display.
Aspect 10: The method of aspect 9, wherein the switching of the folding state of the electronic device comprises a switching of the electronic device from an unfolded state to a folded state, or a switching of the electronic device from the folded state to the unfolded state.
Aspect 11: The method of aspect 9, wherein the configuring of the layout comprises: based on at least one of the characteristics of the second display or the first display which is activated, the attribute information related to each of the plurality of applications, or the history information, determining at least one of the number of areas, sizes of areas, or arrangement of areas of the second display or the first display to display the screen of each application in the switched folding state; and configuring the layout based on at least one of the determined number of the areas, the sizes of the areas, or the arrangement of the areas.
Aspect 12: The method of aspect 10, wherein, the arranging of screens of the plurality of applications based on the configured layout and the displaying of the screens on the second display or the first display comprise: based on detection of the switching from the unfolded state to the folded state via the sensor circuit while displaying screens of the plurality of applications on the first display in the unfolded state, displaying at least one screen among the plurality of screens on the second display; and displaying at least one other screen as an icon in a partial area of the second display or displaying the at least one other screen as a pop-up window on the second display.
Aspect 13: The method of aspect 10, further comprising: detecting reception of an event while displaying the screens of the plurality of applications on the first display in the unfolded state; based on detection of input of selecting the received event, configuring a layout in the unfolded state based on characteristics of the first display 441, attribute information related to each of the plurality of applications, and/or history information; and arranging screens of the plurality of applications and the screen of an application corresponding to the event in the configured layout in the unfolded state and displaying the same on the first display.
Aspect 14: The method of aspect 10, further comprising: detecting reception of an event while displaying screens of the plurality of applications on the second display in the folded state; based on detection of the switching from the folded state to the unfolded state via the sensor circuit, configuring a layout in the unfolded state based on characteristics of the first display which is activated, attribute information related to each of the plurality of applications, and/or history information; and arranging screens of the plurality of applications and the screen of an application corresponding to the event in the configured layout in the unfolded state and displaying the same on the first display.
Aspect 15: The method of aspect 10, further comprising: based on detection of a designated input while displaying screens of the plurality of applications on the first display in the unfolded state, displaying at least one item indicating a layout related to the arrangement of the screens of the plurality of applications in the unfolded state in a first form in a partial area of the first display; and based on detection of the switching from the unfolded state to the folded state via the sensor circuit, changing the at least one item displayed in the first form to a second form indicating a layout in the folded state and displaying the same in a partial area of the second display.

## Claims

1. An electronic device comprising:
a hinge device;
a first housing connected to the hinge device;
a second housing connected to the hinge device to be foldable with respect to the first housing;
a first display disposed on a first side of the first housing and a first side of the second housing;
a second display disposed on a second side of the second housing opposite to the first side of the second housing;
a sensor circuit;
memory storing instructions; and
a processor,
wherein the instructions, when executed by the processor, cause the electronic device to:
while the electronic device is in an unfolded state, display a first execution screen of a first application on a first area of the first display and a second execution screen of a second application on a second area of the first display, and
based on detecting that a state of the electronic device changes from the unfolded state to a folded state, split the second display vertically into substantially two areas including a first area and a second area, and display an execution screen of the first application on the first area of the second display and an execution screen of the second application on the second area of the second display.

2. The electronic device of claim 1, wherein the first area of the first display includes an area corresponding to the first side of the first housing, and the second area of the first display includes an area corresponding to the first side of the second housing, or
wherein the first area of the first display includes an area corresponding to a portion of the first side of the first housing and a portion of the first side of the second housing, and the second area of the first display includes an area corresponding to another portion of the first side of the first housing and another portion of the first side of the second housing, and
wherein the first area of the second display includes an upper area and the second area of the second display includes a lower area.

3. The electronic device of claim 2, wherein the instructions, when executed by the processor, cause the electronic device to:
detecting the changing from the unfolded state to the folded state, identify at least one of characteristics of the second display which is activated, or attribute information related to each of the first application and the second application, and
display, on the second display, the execution screen of the first application and the execution screen of the second application based on the identified at least one of the characteristics of the second display which is activated, or the attribute information related to each of the first application and the second application,
wherein the characteristics of the second display which has been activated comprise at least one of a number of multiple windows or a form of a layout supported by the second display according to at least one of a resolution, a ratio, or a size of the second display.

4. The electronic device of claim 3, wherein the attribute information related to each of the first application and the second application comprises at least one of category information of each of the first application and the second application, information on an area in which an execution screen of each of the first application and the second application is arranged on the first display or the second display, or information on whether an input interface has been used.

5. The electronic device of claim 3, wherein the instructions, when executed by the processor, cause the electronic device to:
based on the identified at least one of the characteristics of the second display which is activated, the attribute information related to each of the first application and the second application determine at least one of a number of areas, sizes of areas, or an arrangement of areas of the second display or the first display for displaying an execution screen of each of the first application and the second application in the changed folded state, and
based on at least one of the number of areas, the sizes of areas, or the arrangement of areas, display the execution screen of the first application on the first area of the second display and the execution screen of the second application on the second area of the second display.

6. The electronic device of claim 1, wherein the instructions, when executed by the processor, cause the electronic device to:
after the changing from the unfolded state to the folded state, without a user input, and display the execution screen of the first application on the first area of the second display and the execution screen of the second application on the second area of the second display, or
after the changing from the folded state to the unfolded state, without the user input, and display the first execution screen on the first area of the first display and the second execution screen on the second area of the first display.

7. The electronic device of claim 3, wherein the instructions, when executed by the processor, cause the electronic device to:
detect a reception of a notification while displaying the first execution screen and the second execution screen on the first display in the unfolded state,
in response to detecting an input selecting the notification, identify at least one of the characteristics of the first display, or the attribute information related to each of the first application and the second application, and
display, based on the identified at least one of the characteristics of the first display, the execution screen of the first application, the execution screen of the second application, and an execution screen of a third application corresponding to the notification on the first display.

8. The electronic device of claim 3, wherein the instructions, when executed by the processor, cause the electronic device to:
deactivate the first display and activate the second display based on detecting that the state of the electronic device changes from the unfolded state to the folded state, and
deactivate the second display and activate the first display based on detecting that the state of the electronic device changes from the folded state to the unfolded state.

9. A method of an electronic device, wherein the electronic device comprises:
a hinge device;
a first housing connected to the hinge device;
a second housing connected to the hinge device to be foldable with respect to the first housing;
a first display disposed on a first side of the first housing and a first side of the second housing;
a second display disposed on a second side of the second housing opposite to the first side of the second housing; and
a sensor circuit;
wherein the method comprises:
while the electronic device is in an unfolded state, displaying a first execution screen of a first application on a first area of the first display and a second execution screen of a second application on a second area of the first display; and
based on detecting that a state of the electronic device changes from the unfolded state to a folded state, splitting the second display vertically into substantially two areas including a first area and a second area and displaying an execution screen of the first application on the first area of the second display and an execution screen of the second application on the second area of the second display.

10. The method of claim 9, further comprising:
detecting the changing from the unfolded state to the folded state, identifying at least one of characteristics of the second display which is activated, or attribute information related to each of the first application and the second application; and
displaying, on the second display, the execution screen of the first application and the execution screen of the second application based on the identified at least one of the characteristics of the second display which is activated, or the attribute information related to each of the first application and the second application.

11. The method of claim 10,
wherein the characteristics of the second display which has been activated comprise at least one of a number of multiple windows or a form of a layout supported by the second display according to at least one of a resolution, a ratio, or a size of the second display,
wherein the attribute information related to each of the first application and the second application comprises at least one of category information of each of the first application and the second application, information on an area in which an execution screen of each of the first application and the second application is arranged on the first display or the second display, or information on whether an input interface has been used.

12. The method of claim 11, further comprising:
based on the identified at least one of the characteristics of the second display which is activated, or the attribute information related to each of the first application and the second application, determining at least one of a number of areas, sizes of areas, or an arrangement of areas of the second display or the first display to display an execution screen of each of the first application and the second application in the changed folded state; and
based on at least one of the number of areas, the sizes of areas, or the arrangement of areas, displaying the execution screen of the first application on the first area of the second display and the execution screen of the second application on the second area of the second display.

13. The method of claim 12, further comprising:
after the changing from the unfolded state to the folded state, without a user input, and displaying the execution screen of the first application on the first area of the second display and the execution screen of the second application on the second area of the second display; or
after the changing from the folded state to the unfolded state, changing from a second layout to a first layout without the user input, and displaying the first execution screen on the first area of the first display and the second execution screen on the second area of the first display.
